# EUROPEAN PATENT APPLICATION

(11) **EP 4 761 421 A1**
(43) Date of publication of application: **17.06.2026**
(21) Application number: 24851482.0
(22) Date of filing: 05.07.2024
(51) Int. Cl.: H04W 72/1268, H04W 72/0446, H04W 72/0453

(54) **BASE STATION, TERMINAL, AND COMMUNICATION METHOD**

(30) Priority: 08.08.2023 JP 2023129366
(71) Applicant: Panasonic Intellectual Property Corporation of America, Torrance, CA 90504 (US)
(72) Inventor: NUNOME, Tomoya, kadoma-shi, Osaka 571-0057 (JP); SUZUKI, Hidetoshi, kadoma-shi, Osaka 571-0057 (JP); HORIUCHI, Ayako, kadoma-shi, Osaka 571-0057 (JP)
(74) Representative: Grünecker Patent- und Rechtsanwälte PartG mbB
(86) International application number: PCT/JP2024/024464
(87) International publication number: WO 2025/033052

(57) **Abstract**

The present invention appropriately controls repetitive transmission in wireless communication. This base station is provided with: a control circuit that determines, on the basis of a group including at least a symbol type, a slot that can be used for repetitive transmission of an uplink signal; and a reception circuit that receives the uplink signal in the determined slot.

## Description

### Technical Field

The present disclosure relates to a base station, a terminal, and a communication method.

### Background Art

In 3rd Generation Partnership Project (3GPP), the specification of the physical layer in Release 17 New Radio access technology (NR) has been completed as functional extension of 5th Generation mobile communication systems (5G). NR supports functions for realizing Ultra Reliable and Low Latency Communication (URLLC) in addition to enhanced Mobile Broadband (eMBB) to satisfy requirements of high speed and high capacity (see, e.g., Non-Patent Literatures (hereinafter referred to as "NPLs") 1 to 5).

### Citation List

### Non-Patent Document

NPL 1
   3GPP TS 38.211 V17.5.0, "NR; Physical channels and modulation (Release 17)," June 2023
NPL 2
   3GPP TS 38.212 V17.5.0, "NR; Multiplexing and channel coding (Release 17)," March 2023
NPL 3
   3GPP TS 38.213 V17.6.0, "NR; Physical layer procedure for control (Release 17)," June 2023
NPL 4
   3GPP TS 38.214 V17.6.0, "NR; Physical layer procedures for data (Release 17)," June 2023
NPL 5
   3GPP TS 38.331 V17.5.0, "NR; Radio Resource Control (RRC) protocol specification (Release 17)", June 2023

### Summary of Invention

However, there is room for improvement in repetition transmission control in radio communication.

One non-limiting example of the present disclosure facilitates providing a base station, a terminal, and a communication method each capable of appropriately performing repetition transmission control in radio communication.

A base station according to one exemplary embodiment of the present disclosure includes: control circuitry, which, in operation, determines a slot available for repetition transmission of an uplink signal, based on a group including at least a symbol type; and reception circuitry, which, in operation, receive the uplink signal in the determined slot.

It should be noted that general or specific embodiments may be implemented as a system, an apparatus, a method, an integrated circuit, a computer program, a storage medium, or any selective combination thereof.

According to one embodiment of the present disclosure, repetition transmission control in radio communication can be appropriately performed.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates examples of a Duplex system;
FIG. 2 is a diagram illustrating an example of Dynamic Subband non-overlapping full duplex (SBFD);
FIG. 3 is a diagram illustrating an example of available slot counting;
FIG. 4 is a block diagram illustrating a configuration example of a part of a base station;
FIG. 5 is a block diagram illustrating a configuration example of a part of a terminal;
FIG. 6 is a block diagram illustrating a configuration example of the base station;
FIG. 7 is a block diagram illustrating a configuration example of the terminal;
FIG. 8 is a sequence diagram illustrating an operation example of the base station and the terminal;
FIG. 9 is a diagram illustrating an exemplary method for determining an available slot;
FIG. 10 is a diagram illustrating an exemplary method for determining an available slot;
FIG. 11 is a diagram illustrating an exemplary method for determining an available slot;
FIG. 12 is a diagram illustrating a reception example of a synchronization signal block (SSB);
FIG. 13 is a diagram illustrating an exemplary method for determining an available slot;
FIG. 14 is a diagram illustrating an exemplary method for determining an available slot;
FIG. 15 is a diagram illustrating an exemplary method for determining an available slot;
FIG. 16 is a diagram illustrating an exemplary method for determining an available slot;
FIG. 17 is a diagram illustrating an exemplary method for determining an available slot;
FIG. 18 is a diagram illustrating an exemplary method for determining an available slot;
FIG. 19 is a diagram illustrating an exemplary method for determining an available slot;
FIG. 20 is a diagram of an exemplary architecture of a 3GPP NR system;
FIG. 21 is a schematic diagram illustrating functional separation between a Next Generation - Radio Access Network (NG-RAN) and a 5th Generation Core (5GC);
FIG. 22 is a sequence diagram of a Radio Resource Control (RRC) connection setup/reconfiguration procedure;
FIG. 23 is a schematic diagram illustrating usage scenarios of enhanced mobile broadband (eMBB), massive machine type communications (mMTC), and ultra reliable and low latency communications (URLLC); and
FIG. 24 is a block diagram illustrating an exemplary 5G system architecture for a nonroaming scenario.

### Description of Embodiments

Hereinafter, embodiments of the present disclosure will be described in detail with reference to the accompanying drawings.

### [Regarding Subband Non-Overlapping Full Duplex (SBFD)]

The "Study on evolution of NR duplex operation" has been discussed as a Study Item for Release 18. One of the main topics of the Study Item is the support for subband non-overlapping full duplex (SBFD, also referred to as Cross Division Duplex (XDD)).

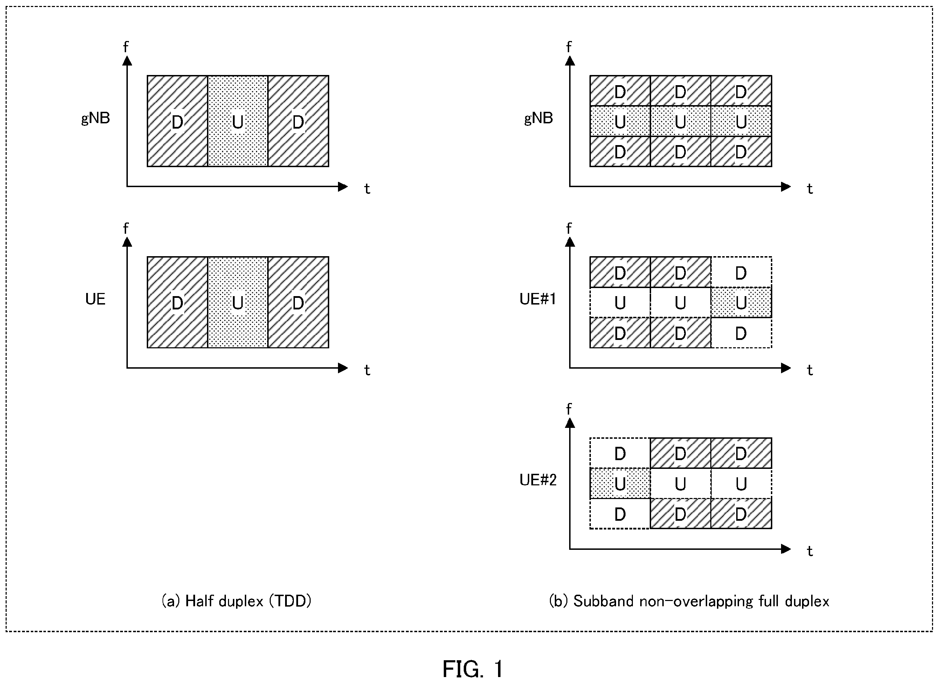

FIG. 1 illustrate examples of a Duplex system. In FIG. 1, a vertical axis represents frequency, and a horizontal axis represents time. Further, "U" indicates uplink transmission and "D" indicates downlink transmission in FIG. 1.

In FIG. 1, part (a) illustrates an example of Time Division Duplex (TDD) in half duplex. In part (a) of FIG. 1, a terminal (e.g., also referred to as user equipment (UE)) is a terminal connected to a base station (e.g., also referred to as gNB). In the half duplex illustrated in part (a) of FIG. 1, the transmission direction (e.g., downlink or uplink) in a certain time resource may be common between the base station and the terminal. For example, the transmission direction is not different between terminals in a certain time resource.

In FIG. 1, part (b) illustrates an example of SBFD. In SBFD, a frequency resource (or frequency band) is divided into multiple bands (also referred to, for example, as subbands, RB sets, sub-bands, sub-BandWidth Parts (sub-BWPs)), and transmission in different directions (e.g., downlink or uplink) in units of subbands is supported. Note that, in SBFD, a terminal performs either uplink or downlink transmission and reception in a certain time resource, and does not perform transmission and reception of the other. In contrast, in SBFD, the base station can simultaneously transmit and receive both the uplink and the downlink. Note that there may be a case where a terminal does not use a resource in the transmission direction in a certain time resource (e.g., a resource indicated by a broken line in part (b) of FIG. 1).

Although not illustrated in FIG. 1, a guardband may be arranged between an uplink subband (UL subband: U) and a downlink subband (DL subband: D). The guardband may be used to reduce interference (cross link interference (CLI)) between different transmission directions (links).

In the following description, a symbol in which an operation or control of SBFD is performed is referred to as an "SBFD symbol". Further, a symbol in which an operation or control of SBFD is not performed (e.g., a symbol different from the SBFD symbol) may be referred to as a "non-SBFD symbol". Further, for example, a slot composed of an SBFD symbol may be referred to as an "SBFD slot", and a slot composed of a non-SBFD symbol may be referred to as a "non-SBFD slot".

Further, a subband configuration is denoted as {X ... X}. X represents a UL subband (U) or a DL subband (D). The order of notation corresponds to the order of arrangement of the subbands. For example, the subband configuration at part (b) in FIG. 1 is denoted as {DUD}.

### [Regarding SBFD symbol/operation]

The SBFD symbol may be configured using, for example, a legacy symbol (or an existing symbol) such as a DL symbol, a UL symbol, or a Flexible symbol. For example, the SBFD symbol may be configured using at least one legacy symbol of a DL symbol and/or a Flexible symbol. For example, the legacy symbol may be changed and used as an SBFD symbol. The legacy symbol is configured, for example, by RRC signaling (e.g., TDD-UL-DL-ConfigCommon). Here, the non-SBFD symbol is, for example, a legacy symbol that is not used as an SBFD symbol.

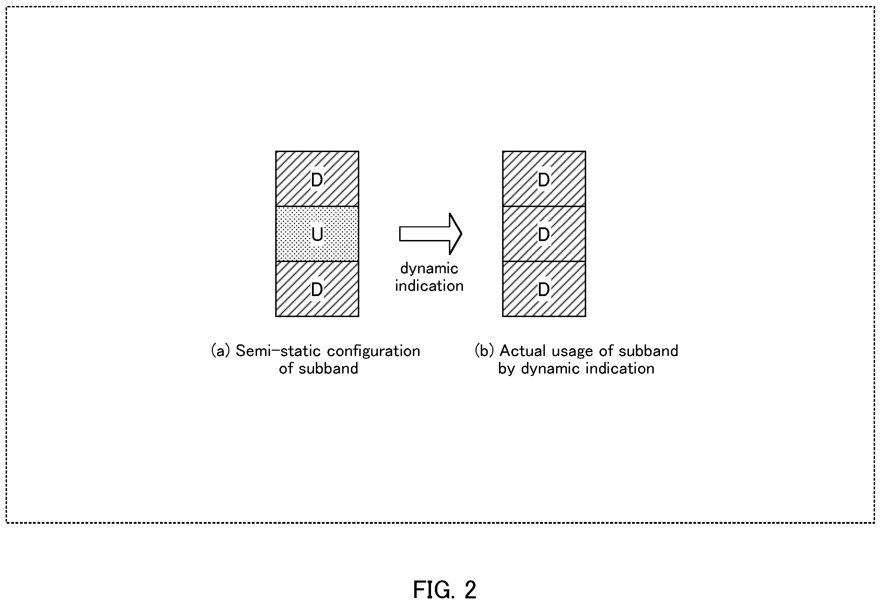

Further, as SBFD control, for example, at least one of semi-static SBFD and/or dynamic SBFD may be applied. In the semi-static SBFD, the transmission direction in a subband is configured semi-statically (e.g., transmission direction is not dynamically changed). Further, in the dynamic SBFD, the transmission direction of a subband may be dynamically changed. FIG. 2 illustrates an example of a dynamic SBFD. In FIG. 2, part (a) illustrates an example of the transmission direction ({DUD}) of a subband configured semi-statically, and part (b) illustrates an example of the transmission direction ({DDD}) after being dynamically changed. In the example of FIG. 2, the transmission direction of the second subband is changed from uplink (U) to downlink (D).

### [Regarding available slot counting]

In Release 17, "Available slot counting" for repeated (repetition) transmission of a physical uplink shared channel (PUSCH) (e.g., PUSCH repetition type A) is introduced.

In the existing PUSCH repetition type A, as an example, in a case where a time domain resource for one transmission among four repetitions overlaps with a DL symbol, the one transmission is not performed, and the remaining three transmissions are performed. In this case, since the effective coding rate increases, the effect of the repetition transmission may not be sufficiently obtained. Therefore, for example, in a case where a symbol configured for PUSCH repetition transmission overlaps with a DL symbol, a resource for PUSCH is allocated to a slot (referred to as an "available slot") that can be used for the PUSCH repetition transmission, after the DL symbol. As a result, PUSCH can be transmitted up to the configured number of repetitions, and the decrease in the coding rate can be prevented.

For example, PUSCH transmission using the available slot counting is performed by the following two steps.

### <Step 1>

A slot that can be used (available) for K repetitions of PUSCH transmission is determined based on the resource allocation of PUSCH and the configuration of the slot format (here, K represents the number of repetitions). In a case where the resource allocation of PUSCH overlaps with a DL symbol, a slot including the DL symbol is determined to be unavailable (or not available). The time domain resource allocation (e.g., the symbol number used for PUSCH in each slot) is the same between the slots. The slot format may be configured by RRC signaling (e.g., TDD-UL-DL-ConfigCommon or TDD-UL-DL-ConfigDedicated). Further, a symbol in which the SSB configured by RRC signaling (e.g., ssb-PositionsInBurst) is transmitted may be regarded as a DL symbol.

### <Step 2>

The terminal determines whether or not to drop (e.g., to discard transmission) PUSCH transmission due to a dynamic factor. For example, the PUSCH transmission may be dropped due to another UL transmission having a higher priority than the PUSCH transmission. Even in a case where the PUSCH transmission is dropped, the number of PUSCH transmissions may not be added. For example, in a case where one transmission among the K transmissions of PUSCH is dropped, the number of PUSCH transmissions is K-1.

The transmission using the available slot (slot that can be used) can be applied to repetition transmission of a physical uplink control channel (PUCCH) or transmission of a sounding reference signal (SRS) in addition to PUSCH repetition type A. Further, the transmission using an available slot may be applied to, for example, repetition of a configured grant PUSCH (CG-PUSCH).

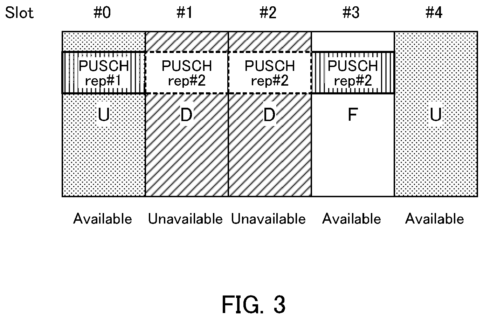

FIG. 3 illustrates an example of the available slot counting.

In FIG. 3, Slots #0 and #4 are UL slots (slots composed of UL symbols. The slots are represented by "U".), and Slots #1 and #2 are DL slots (slots composed of DL symbols. The slots are represented by "D".), and Slot#3 is a flexible slot (a slot composed of flexible symbols. The slots are represented by "F".). As an example, a case where PUSCH is scheduled in two repetitions (e.g., PUSCH rep#1 and PUSCH rep#2) in Slot#0 will be described. In this case, the terminal determines a slot available for two repetitions of the transmission. For example, as illustrated in FIG. 3, since Slots #1 and #2 are DL slots, it is determined to be "unavailable (cannot be used)". Further, as illustrated in FIG. 3, since Slot#3 is a flexible slot, it is determined to be "available (can be used)". Therefore, the PUSCH transmission is assigned to Slots #0 and Slot#3. In FIG. 3, since Slot#4 is also a UL slot, it is determined to be available, but since the two PUSCH transmissions (the configured number of repetitions) are reached in Slot#3, whether or not a slot after Slot#3 is available may not be determined.

In one non-limiting example of the present disclosure, a control method of PUSCH repetition (e.g., available slot counting) in a case of performing an SBFD operation will be described.

### [Overview of Communication System]

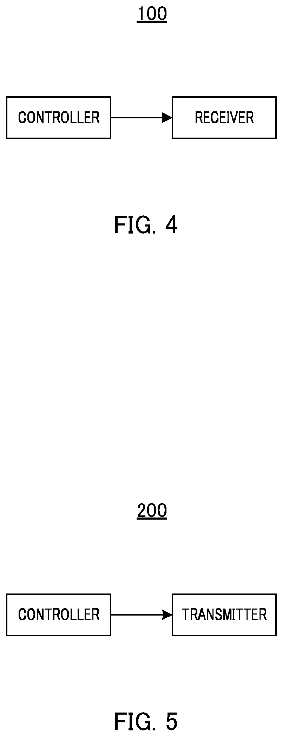

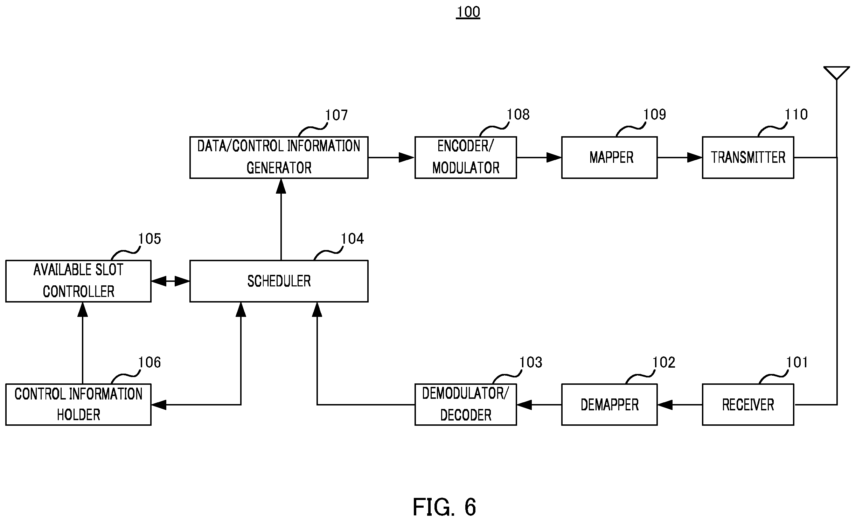

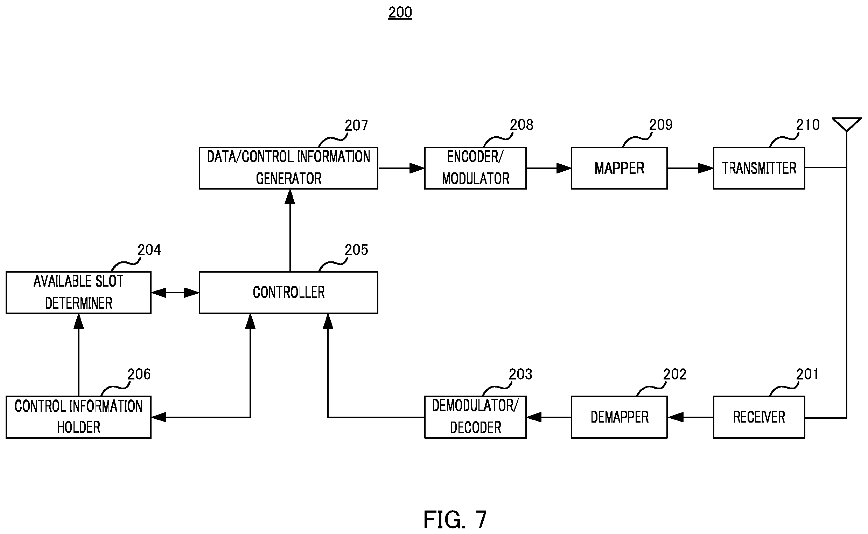

A communication system according to one exemplary embodiment of the present disclosure may include, for example, base station 100 (e.g., gNB) illustrated in FIGS. 4 and 6 and terminal 200 (e.g., UE) illustrated in FIGS. 5 and 7. The communication system may include a plurality of base stations 100 and a plurality of terminals 200.

FIG. 4 is a block diagram illustrating a configuration example of a part of base station 100 according to one exemplary embodiment of the present disclosure. In base station 100 illustrated in FIG. 4, a controller (e.g., corresponding to control circuitry) determines a slot that can be used (available slot) for repetition transmission of an uplink signal (e.g., repetition transmission of PUSCH) based on at least a group including a symbol type. A receiver (e.g., reception circuitry) receives the uplink signal in the determined slot.

FIG. 5 is a block diagram illustrating a configuration example of a part of terminal 200 according to one exemplary embodiment of the present disclosure. In terminal 200 illustrated in FIG. 5, a controller (e.g., corresponding to control circuitry) determines a slot that can be used (available slot) for repetition transmission of an uplink signal (e.g., repetition transmission of PUSCH) based on at least a group including a symbol type. A transmitter (e.g., transmission circuitry) transmits the uplink signal in the determined slot.

### (Configuration of Base Station)

FIG. 6 is a block diagram illustrating a configuration example of base station 100 according to one exemplary embodiment of the present disclosure. In FIG. 6, base station 100 includes receiver 101, demapper 102, demodulator/decoder 103, scheduler 104, available slot controller 105, control information holder 106, data/control information generator 107, encoder/modulator 108, mapper 109, and transmitter 110.

For example, at least one of demapper 102, demodulator/decoder 103, scheduler 104, available slot controller 105, control information holder 106, data/control information generator 107, encoder/modulator 108, and/or mapper 109 may be included in the controller illustrated in FIG. 4, and receiver 101 may be included in the receiver illustrated in FIG. 4.

Receiver 101 performs reception processing such as down-conversion or A/D conversion on a received signal received through an antenna, and outputs the received signal after the reception processing to demapper 102.

Demapper 102 performs resource demapping on the received signal (e.g., uplink signal) input from receiver 101, and outputs a modulated signal to demodulator/decoder 103.

Demodulator/decoder 103 demodulates and decodes, for example, the modulated signal input from demapper 102, and outputs a decoding result to scheduler 104.

Scheduler 104 may perform, for example, scheduling for terminal 200. Scheduler 104 performs, for example, scheduling of transmission and reception of each terminal 200 based on at least one of the decoding result input from demodulator/decoder 103, the information (e.g., information related to the available slot) input from available slot controller 105, and/or the control information input from control information holder 106, and issues a generation instruction of at least one of data and/or control information to data/control information generator 107. Further, scheduler 104 outputs, for example, information (e.g., resource allocation information) on the scheduling to available slot controller 105. Further, scheduler 104 outputs the control information related to the scheduling for terminal 200 to control information holder 106.

Available slot controller 105 determines, for example, an available slot for PUSCH based on the information (e.g., the resource allocation information) on the scheduling input from scheduler 104 and the control information (e.g., the slot format information) input from control information holder 106. Available slot controller 105 outputs the information related to the determined available slot to scheduler 104.

Control information holder 106 holds, for example, the control information configured for each terminal 200. The control information may include, for example, information related to SBFD and information (e.g., the number of repetitions) related to an uplink channel. Control information holder 106 may output, for example, the held information to each configuration unit (e.g., scheduler 104 and available slot controller 105) of base station 100 as necessary.

Data/control information generator 107 generates, for example, at least one of data and/or control information in accordance with the indication from scheduler 104 and outputs a signal including the generated data or control information to encoder/modulator 108. The generated data may include, for example, signaling information of a higher layer.

Encoder/modulator 108 encodes and modulates, for example, the signal input from data/control information generator 107 (e.g., data and control information), and outputs the modulated signal to transmitter 110.

Mapper 109 performs resource mapping on, for example, the modulated signal input from encoder/modulator 108, and outputs the transmission signal to transmitter 110.

Transmitter 110 performs, for example, transmission processing such as D/A conversion, up-conversion, or amplification on the signal input from mapper 109, and transmits the radio signal obtained by the transmission processing to terminal 200 from the antenna.

### (Configuration of Terminal)

FIG. 7 is a block diagram illustrating a configuration example of terminal 200 according to one aspect of the present disclosure. In FIG. 7, terminal 200 includes receiver 201, demapper 202, demodulator/decoder 203, available slot determiner 204, controller 205, control information holder 206, data/control information generator 207, encoder/modulator 208, mapper 209, and transmitter 210.

For example, at least one of demapper 202, demodulator/decoder 203, available slot determiner 204, controller 205, control information holder 206, data/control information generator 207, encoder/modulator 208, and/or mapper 209 may be included in the controller illustrated in FIG. 5, and transmitter 210 may be included in the transmitter illustrated in FIG. 5.

Receiver 201 performs, for example, reception processing such as down-conversion or A/D conversion on a received signal received via an antenna, and outputs the received signal after the reception processing to demapper 202.

Demapper 202 performs resource demapping on, for example, the received signal input from receiver 201, and outputs the modulated signal to demodulator/decoder 203.

Demodulator/decoder 203 demodulates and decodes, for example, the modulated signal input from demapper 202, and outputs a decoding result to controller 205. The decoding result may include, for example, at least one of higher layer signaling information and/or the downlink control information.

Available slot determiner 204 determines, for example, an available slot based on the control information (e.g., slot format information) input from control information holder 206 or the control information (e.g., the resource assignment information) input from controller 205, and outputs the information related to the determined available slot to controller 205.

Controller 205 may determine, for example, the presence or absence of transmission or reception of data or control information based on the decoding result (e.g., data or control information) input from demodulator/decoder 203 and the control information input from control information holder 206. For example, in a case where the presence of transmission of data or control information is determined in the determination result, controller 205 outputs the resource allocation information to available slot determiner 204. Further, controller 205 may determine a slot for transmitting the data or control information based on the information related to the available slot input from available slot determiner 204, and issue a generation instruction of at least one of the data and/or control information to data/control information generator 207. Further, controller 205 outputs, for example, the control information related to scheduling for terminal 200 to control information holder 206.

Control information holder 206 holds, for example, the control information input from controller 205, and outputs the held information to each configuration unit (e.g., available slot determiner 204 and controller 205) as necessary.

Data/control information generator 207 generates, for example, the data or the control information in response to the instruction from controller 205, and outputs a signal including the generated data or control information to encoder/modulator 208.

Encoder/modulator 208 encodes and modulates, for example, the signal input from data/control information generator 207, and outputs the modulated signal to mapper 209.

Mapper 209 performs resource mapping on the modulated signal input from encoder/modulator 208, and outputs the transmission signal to transmitter 210.

Transmitter 210 performs, for example, transmission processing such as D/A conversion, up-conversion, or amplification on the signal input from mapper 209, and transmits the radio signal obtained by the transmission processing to base station 100 from the antenna.

### [Operations of Base Station 100 and Terminal 200]

Exemplary operations of base station 100 and terminal 200 having the above configurations will be described.

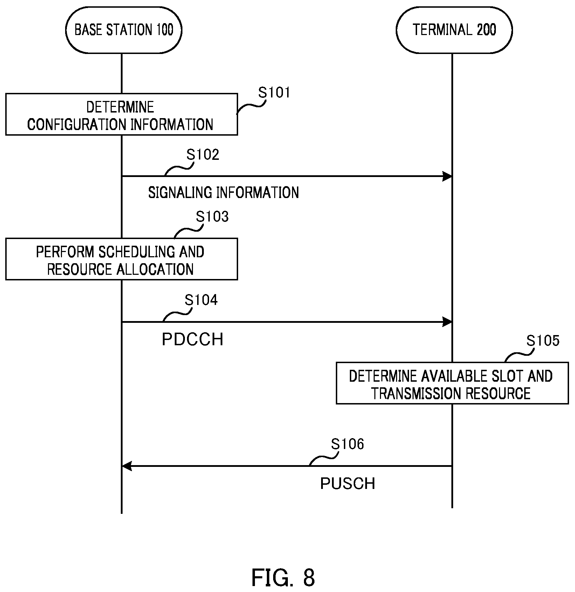

FIG. 8 is a sequence diagram illustrating an operation example of base station 100 and terminal 200.

In FIG. 8, base station 100 determines, for example, a configuration related to an SBFD or uplink channel (e.g., PUSCH or PUCCH) (S101).

Base station 100 transmits, to terminal 200, higher layer signaling information including, for example, determined configuration information (S102).

Base station 100 performs, for example, scheduling and resource allocation for terminal 200 (S103). Base station 100 may determine, for example, an available slot for terminal 200 (e.g., PUSCH transmission) and schedule PUSCH.

Base station 100 transmits PDCCH based on a result of the scheduling and the resource allocation (S104).

Terminal 200 determines (or configures, determines, or identifies) an available slot and a transmission resource (time and/or frequency resource (also referred to as a time-frequency resource)) of PUSCH based on, for example, the configuration information included in the signaling information transmitted from base station 100 and PDCCH transmitted from base station 100 (S105).

Terminal 200 transmits PUSCH based on, for example, the determined transmission resource (S106).

[Method of Determining Available Slot] A method of determining an available slot in base station 100 (e.g., available slot controller 105) will be described. Terminal 200 (e.g., available slot determiner 204) may determine an available slot, for example, assuming a method of determining an available slot performed by base station 100.

Hereinafter, an exemplary method of determining an available slot will be described.

### <Method 1>

In Method 1, base station 100 determines an available slot for PUSCH transmission based on a symbol type.

For example, a configuration (or limitation) within some symbol types for application of repetition transmission is assumed. For example, since a radio quality or an antenna configuration may be different between an SBFD symbol and a non-SBFD symbol, repetition may be applied separately between the SBFD symbol and the non-SBFD symbol by making the determination of an available slot different according to the symbol type. As a result, for example, transmission using different modulation and coding schemes (MCS) between an SBFD symbol and a non-SBFD symbol or transmission according to a different antenna configuration can be performed.

For example, the following symbol types may be used.

"Type 1": non-SBFD symbol that is not dynamically converted into an SBFD symbol (e.g., non-SBFD symbol to which a dynamic SBFD is not applied). The DL symbol of Type 1 is not regarded as a symbol that can be transmitted in UL.

"Type 2": non-SBFD symbol that can be dynamically converted into an SBFD symbol (e.g., non-SBFD symbol to which a dynamic SBFD can be applied). The DL symbol of Type 2 is not regarded as a symbol that can be transmitted in UL.

"Type 3": SBFD symbol that is not dynamically converted into a non-SBFD symbol (e.g., SBFD symbol to which a dynamic SBFD is not applied).

"Type 4": SBFD symbol that can be dynamically converted into the non-SBFD symbol (e.g., SBFD symbol to which a dynamic SBFD can be applied). In a case where it is known that the symbol of Type 4 is converted into a non-SBFD symbol to be a DL symbol (or the transmission direction of all the subbands is DL), the symbol of Type 4 is not regarded as a symbol that can be transmitted in UL.

"Type 5": non-SBFD symbol to which the control of an SBFD can be applied by a transparent method. For example, the symbol of Type 5 may include a flexible symbol.

The symbol type may be explicitly configured (defined or specified) or may be implicitly determined from another configuration (or parameters and the like). Further, for example, a plurality of symbol types may be grouped. Further, how to use the symbol type may be different depending on the method described below.

Base station 100 may determine (or judge) an available slot for PUSCH transmission based on a group including each symbol type by grouping a plurality of symbol types described above.

Hereinafter, a method of determining an available slot based on a symbol type will be described.

### <Method 1-1>

In Method 1-1, base station 100 determines an available slot based on a symbol type without considering dynamic conversion between an SBFD symbol and a non-SBFD symbol.

For example, a case where UL transmission is scheduled for a non-SBFD symbol (e.g., including a plurality of non-SBFD symbols) configured semi-statically (e.g., a case where UL transmission is scheduled for a symbol type of Type 1 or Type 2) will be described.

In this case, in a case where a symbol of the symbol number for which UL transmission is scheduled is a non-SBFD symbol configured semi-statically (e.g., in a case where the symbol type is Type 1 or Type 2) in a slot after the symbol for which the UL transmission is scheduled, and the symbol is a UL symbol or a flexible symbol, base station 100 determines a slot including the symbol as the available slot.

In Method 1-1, since dynamic conversion between an SBFD symbol and a non-SBFD symbol is not considered, the symbols of Type 1 and Type 2 are not distinguished in determining an available slot.

Next, for example, a case where the UL transmission is scheduled for an SBFD symbol (e.g., including a plurality of SBFD symbols) configured semi-statically (e.g., a case where the UL transmission is scheduled for the symbol type of Type 3 or Type 4) will be described.

In this case, in a case where a symbol of the symbol number for which the UL transmission is scheduled is an SBFD symbol (e.g., in a case where the symbol type is Type 3 or Type 4) in the slot after the symbol for which the UL transmission is scheduled, base station 100 determines the slot including the symbol as an available slot.

In Method 1-1, since dynamic conversion between an SBFD symbol and a non-SBFD symbol is not considered, the symbols of Type 3 and Type 4 are not distinguished in determining an available slot.

As described above, in Method 1-1, for example, the available slot for PUSCH transmission is determined based on a group including Type 1 and Type 2 and a group including Type 3 and Type 4.

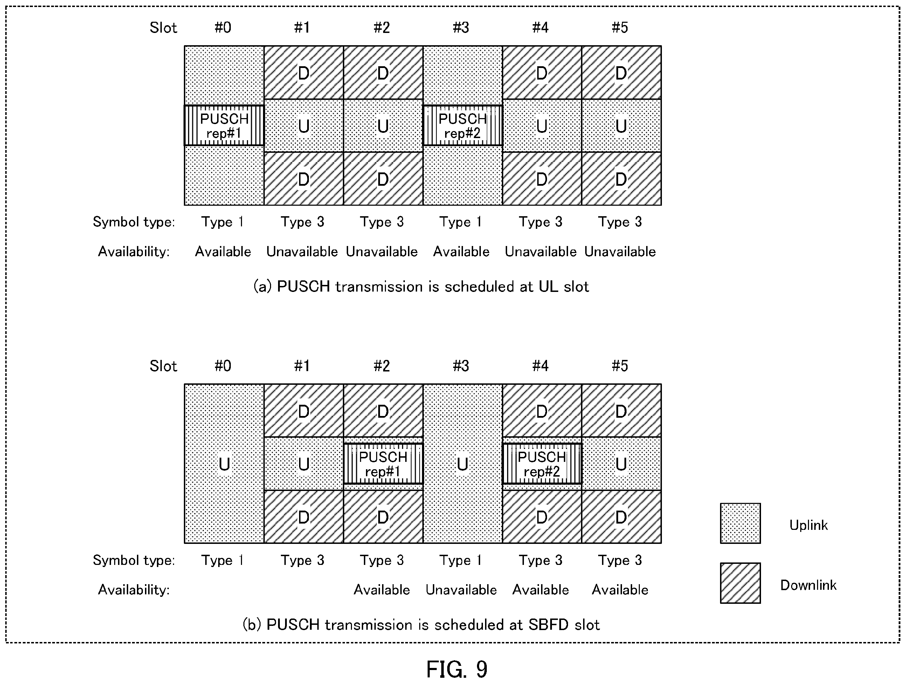

FIG. 9 illustrates a determination example of an available slot according to Method 1-1. In the example of FIG. 9, the number of repetitions of PUSCH is configured to two (e.g., represented by PUSCH rep#1 and PUSCH rep#2).

In the example of FIG. 9, Slots #0 and #3 are UL slots (e.g., slots composed of UL symbols), and Slots #1, #2, #4, and #5 are SBFD slots (e.g., slots composed of SBFD symbols).

In FIG. 9, part (a) illustrates an example in which PUSCH is scheduled in UL slots (e.g., including a non-SBFD symbol (UL symbol)). As illustrated in part (a) of FIG. 9, the PUSCH transmission (PUSCH rep#1) is scheduled in Slot#0 (e.g., a slot composed of non-SBFD symbol of Type 1). In this case, the next Slot#1 and Slot#2 are, for example, slots composed of SBFD symbols of Type 3 and thus are determined to be unavailable. Meanwhile, since Slot#3 is a UL slot (e.g., a slot composed of non-SBFD symbol of Type 1), it is determined to be available. Therefore, in the example of part (a) in FIG. 9, Slots #0 and #3 are determined as available slots, and the second PUSCH (PUSCH rep#2) is transmitted in Slot#3.

In FIG. 9, (b) illustrates an example in which PUSCH is scheduled in SBFD slots (e.g., slots composed of SBFD symbols). As illustrated in part (b) of FIG. 9, the PUSCH transmission (PUSCH rep#1) is scheduled in Slot#2 (e.g., a slot composed of SBFD symbol of Type 3). In this case, the next Slot#3 is the UL slot (e.g., a slot composed of non-SBFD symbol of Type 1) and thus is determined to be unavailable. Meanwhile, since Slot#4 is, for example, a slot composed of an SBFD symbol of Type 3, it is determined to be available. Therefore, in the example of part (b) in FIG. 9, Slots #2 and #4 are determined as available slots, and the second PUSCH (PUSCH rep#2) is transmitted in Slot #4.

As described above, according to Method 1-1, terminal 200 can perform the PUSCH transmission (e.g., individual MCS configuration for an SBFD symbol and a non-SBFD symbol) according to the communication quality of each of the SBFD symbol and the non-SBFD symbol, so that the performance of UL transmission can be improved.

### <Method 1-2>

In Method 1-2, base station 100 determines an available slot based on the symbol type by considering dynamic conversion between an SBFD symbol and a non-SBFD symbol.

For example, in a case where the UL transmission is scheduled for a non-SBFD symbol, the SBFD symbol that can be dynamically converted into a non-SBFD symbol may be regarded as a symbol that can be transmitted in UL. However, it is assumed that the SBFD symbol may be converted into a UL symbol or a flexible symbol (or the symbol that can be transmitted in UL) in a case of being converted into a non-SBFD symbol. For example, in a case where an SBFD symbol is converted only into a DL symbol, the symbol is not regarded as a symbol that can be transmitted in UL. For example, in a case where the UL transmission is scheduled for a symbol of the following symbol type, the symbols of Type 1, Type 2, and Type 4 may be regarded as the symbols that can be transmitted in UL. The symbol of Type 3 is always an SBFD symbol and thus is excluded from the symbols that can be transmitted in UL.
- Type 1 symbol
- Type 2 symbol and symbol that is not converted into an SBFD symbol
- Type 4 symbol and symbol that is converted into a non-SBFD symbol

For example, in Method 1-2, base station 100 may include these symbol types in one group and determine an available slot of the PUSCH transmission based on the group.

Further, for example, in a case where the UL transmission is scheduled for an SBFD symbol, a non-SBFD symbol that can be dynamically converted into an SBFD symbol may be regarded as the symbol that can be transmitted in UL. For example, in a case where the UL transmission is scheduled for a symbol of the following symbol type, the symbols of Type 2, Type 3, and Type 4 may be regarded as the symbols that can be transmitted in UL. The symbol of Type 1 is always a non-SBFD symbol and thus is excluded from the symbols that can be transmitted in UL.
- Type 3 symbol
- Type 2 symbol and symbol that is converted into an SBFD symbol
- Type 4 symbol and symbol that is not converted into a non-SBFD symbol

For example, in Method 1-2, base station 100 may include these symbol types in one group and determine an available slot of the PUSCH transmission based on the group.

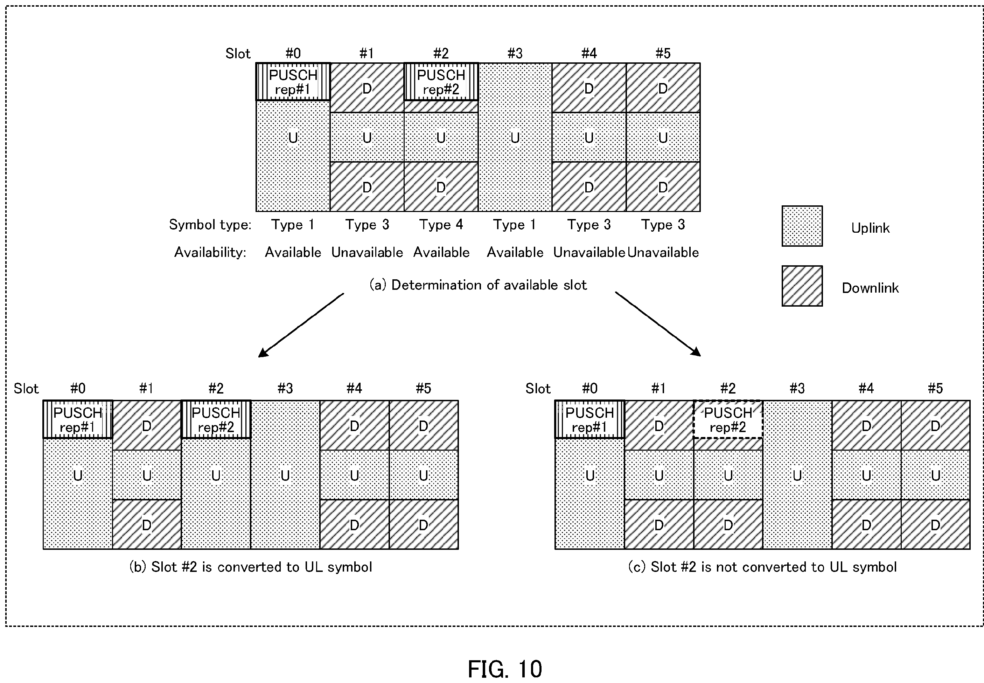

FIG. 10 illustrates a determination example of the available slot according to Method 1-2. In the example of FIG. 10, the number of repetitions of PUSCH is configured to two (e.g., represented by PUSCH rep#1 and PUSCH rep#2).

In FIG. 10, part (a) illustrates an example of a semi-static slot configuration and the determination of an available slot. In the example of part (a) in FIG. 10, the PUSCH transmission (PUSCH rep#1) is scheduled in Slot#0 (a slot composed of non-SBFD symbol of Type 1). In this case, the next Slot#1 (a slot composed of SBFD symbol of Type 3) is not converted into a non-SBFD symbol and thus is determined to be unavailable. Further, in part (a) of FIG. 10, since Slot#2 (a slot composed of SBFD symbol of Type 4) can be converted into a non-SBFD symbol, it is determined to be available. Therefore, in the example of part (a) in FIG. 10, Slots #0, #2, and #3 are determined as available slots.

In FIG. 10, part (b) illustrates a case where Slot#2 is actually dynamically converted into a UL slot (a slot composed of non-SBFD symbol) from the slot composed of part (a) in FIG. 10. In this case, PUSCH rep#2 can be transmitted in Slot#2.

In FIG. 10, part (c) illustrates a case where Slot#2 is not actually dynamically converted into a UL slot (a slot composed of non-SBFD symbol) from the slot configuration of part (a) in FIG. 10 (e.g., a case where Slot#2 is a slot composed of SBFD symbol). In this case, since the resource allocated to PUSCH rep#2 in Slot#2 is a DL subband, the transmission of PUSCH rep#2 is dropped (e.g., PUSCH rep#2 is not transmitted).

In FIG. 10, the case where the UL transmission (e.g., PUSCH rep#1) is scheduled for the slot composed of a non-SBFD symbol has been described, but the same operation may be applied to a case where the UL transmission (e.g., PUSCH rep#1) is scheduled for the slot composed of an SBFD symbol.

As described above, according to Method 1-2, terminal 200 determines an available slot by considering the state of a symbol after dynamic conversion in a dynamic SBFD, so that the transmission opportunity of the repetition can be improved (increased).

### <Method 1-3>

In Method 1-3, base station 100 determines an available slot based on the symbol type by considering that a flexible symbol is used for the SBFD operation by the transparent method. That is, base station 100 determines an available slot for the PUSCH transmission by considering the use of a flexible symbol in the SBFD operation by the transparent method.

The flexible symbol can be used for both the UL transmission and the DL reception by, for example, dynamic control (e.g., the scheduling of the transmission and reception by PDCCH). Therefore, the SBFD operation can be realized by the transparent method using a flexible symbol. For example, by using a flexible symbol, the DL reception and the UL transmission can be realized in the same symbol without explicitly configuring a subband.

Further, for example, it is assumed that terminal 200 that supports the SBFD operation (hereinafter, referred to as an "SBFD-compatible terminal") and terminal 200 that does not support the SBFD operation (hereinafter, referred to as an "SBFD-incompatible terminal") are connected to the same base station 100. Therefore, the SBFD operation by the transparent method using a flexible symbol is effective for an SBFD-incompatible terminal.

For example, the SBFD-incompatible terminal can separately assign DL reception and UL transmission for each subband and perform the transmission and reception, as with the SBFD-compatible terminal. Meanwhile, in a case where the SBFD-compatible terminal can specify (or can understand) the possibility of the transparent SBFD operation (e.g., in a case where the symbol type of Type 5 is configured for an SBFD-compatible terminal), the performance may be improved by treating a flexible symbol in the same manner as an SBFD symbol. That is, in a case where the SBFD operation is performed in a flexible symbol, interference between DL and UL may occur, so that MCS and the like can be efficiently configured by assuming the same communication quality as the SBFD.

The SBFD-compatible terminal is, for example, a terminal that supports the control and functions of SBFD or is also referred to as an SBFD aware UE. Further, the SBFD-incompatible terminal is, for example, a terminal that does not support the control and functions of SBFD or is also referred to as a non-SBFD aware UE.

For example, in a case where the UL transmission is scheduled for a symbol of Type 1 or Type 2 (e.g., a non-SBFD symbol), the symbols of Type 1 and Type 2 may be regarded as the symbols that can be transmitted in UL.

Further, for example, in a case where the UL transmission is scheduled for the symbol of Type 3, Type 4, or Type 5, the symbols of Type 3, Type 4, and Type 5 may be regarded as the symbols that can be transmitted in UL.

As described above, in Method 1-3, for example, base station 100 may determine an available slot for the PUSCH transmission based on a group including the symbol types of Type 1 and Type 2 and a group including the symbol types of Type 3, Type 4, and Type 5.

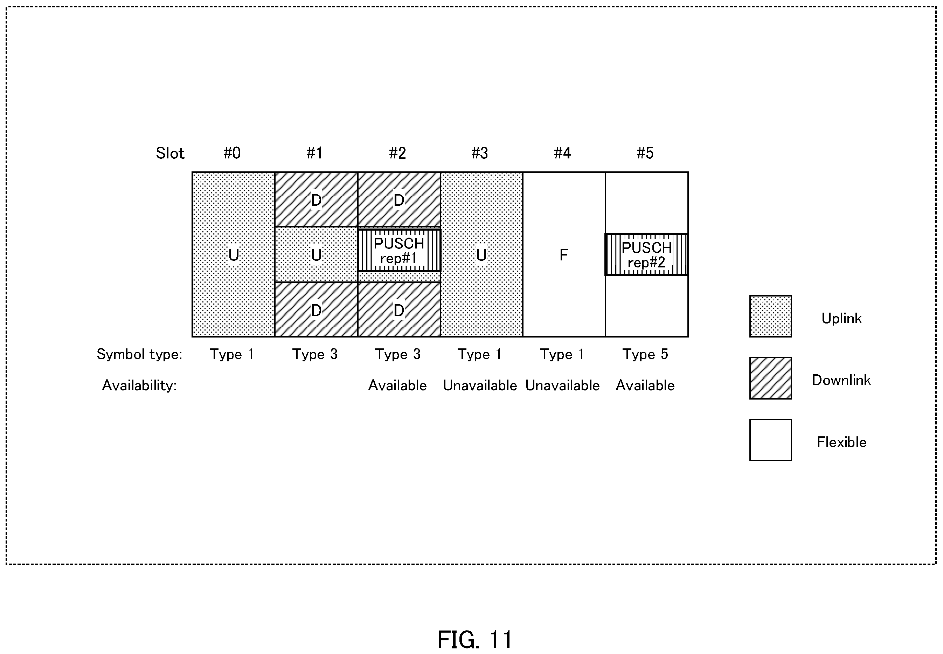

FIG. 11 illustrates a determination example of an available slot according to Method 1-3. In the example of FIG. 11, the number of repetitions of PUSCH is configured to two (e.g., represented by PUSCH rep#1 and PUSCH rep#2).

In FIG. 11, Slots #4 and #5 are slots composed of flexible symbols. Slot#4 is a slot composed of a symbol (e.g., symbol of Type 1) that does not have a possibility of performing the SBFD operation, and Slot#5 is a slot composed of a symbol (e.g., symbol of Type 5) that has a possibility of performing the SBFD operation transparently.

In the example of FIG. 11, the PUSCH transmission (PUSCH rep#1) is scheduled in Slot#2 (a slot composed of SBFD symbol of Type 3). In this case, the next Slot#3 (a slot composed of symbol of Type 1) is not converted into the SBFD symbol and thus is determined to be unavailable. Further, since Slot#4 (a slot composed of flexible symbol of Type 1) is not used for the SBFD operation (or is transparent to the SBFD-compatible terminal even in a case where the SBFD operation is performed), it is determined to be unavailable. Meanwhile, since Slot#5 (a slot composed of flexible symbol of Type 5) can be used for the SBFD operation, it is determined to be available.

Therefore, in the example of FIG. 11, Slots #2 and #5 are determined as available slots, and the second PUSCH (PUSCH rep#2) is transmitted in Slot#5.

As described above, according to Method 1-3, by using a flexible symbol to perform the SBFD operation transparently for an SBFD-incompatible terminal and configuring the possibility of the SBFD operation for an SBFD-compatible terminal, the SBFD-incompatible terminal and the SBFD-compatible terminal can be efficiently accommodated by the same base station. As a result, the transmission and reception opportunity can be improved for the SBFD-incompatible terminal, and the performance of the UL transmission can be improved by considering the interference or the like due to the SBFD for the SBFD-compatible terminal.

The method for determining an available slot according to Method 1 has been described above.

### <Additional Rules>

The following additional rules may be applied to Method 1.

### <Rule 1-1>

A specific SBFD symbol/slot is always determined to be unavailable.

By always determining the specific SBFD symbol/slot to be unavailable, the UL transmission (e.g., repetition transmission using an available slot) in the specific SBFD symbol/slot can be stopped. The stop of the UL transmission in the SBFD symbol/slot can be used, for example, for the purpose of protecting the transmission and reception of an SBFD-incompatible terminal.

For example, in a case of performing DL reception in an SBFD symbol, the interference from a UL subband of the SBFD symbol may occur, so that the DL received quality of an SBFD-incompatible terminal can be improved by stopping the UL transmission in the specific SBFD symbol.

By Rule 1-1, the interference between DL and UL can be reduced in the specific SBFD symbol, and the quality of the transmission and reception can be improved.

The presence or absence of the application of the configuration of Rule 1-1 may be different for each terminal.

### <Rule 1-2>

A part or all of the slots including an SBFD symbol in which an SSB (Synchronization Signal Block) is disposed are configured to be determined to be unavailable.

For example, in a case where an SSB is assigned to an SBFD symbol and the UL transmission is scheduled in the same symbol, terminal 200 cannot receive the SSB for halfduplex communication. In a case where the SSB cannot be received, the processing of terminal 200 such as the synchronization processing may be affected.

Therefore, in Rule 1-2, by determining a part or all of the slots including an SBFD symbol in which an SSB is disposed to be unavailable, the SSB reception in terminal 200 can be performed.

The configuration of the timing (or the timing of receiving the SSB) at which the determination is made to be unavailable may be different between terminals 200.

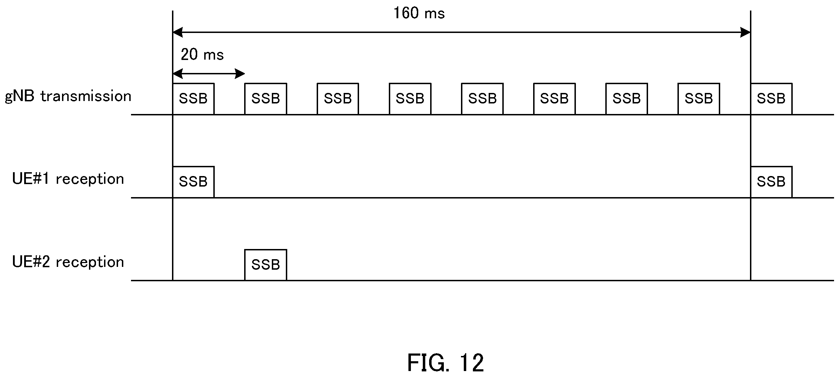

FIG. 12 illustrates an example of SSB reception in a case where Rule 1-2 is applied. In the example of FIG. 12, an SSB is transmitted from base station 100 (e.g., gNB) every 20 ms, and terminal 200 (e.g., UE#1 or UE#2) receives the SSB every 160 ms. The transmission cycle of the SSB and the cycle at which terminal 200 receives the SSB are not limited to the example of FIG. 12.

In FIG. 12, UE#1 is configured to determine a slot in which the first SSB is transmitted to be unavailable in order to receive the SSB at the first timing of the 160 ms cycle. Similarly, in FIG. 12, UE#2 is configured to determine a slot in which the second SSB is transmitted to be unavailable in order to receive an SSB at the second timing of the 160 ms cycle.

As illustrated in FIG. 12, by determining a part of the slots including an SBFD symbol in which an SSB is disposed to be unavailable, terminal 200 can receive the SSB. Further, by determining a part of the slots including an SBFD symbol in which an SSB is disposed to be unavailable, the transmission opportunity of UL in the slot can be reserved, the advantage of SBFD can be prevented from being impaired, and the adjustment of the opportunity of the SSB reception and the UL transmission can be performed.

### <Method 2>

In Method 2, base station 100 determines an available slot of the PUSCH transmission based on the symbol type and the frequency domain resource allocated to the UL transmission (repetition transmission).

In Method 2, the available slot is determined by considering the position of the frequency domain resource allocated to the UL transmission in addition to the same symbol type as in Method 1. For example, the determination of whether or not the resource allocated to the UL transmission is within an UL resource (e.g., UL subband) in an SBFD symbol may be added to the determination of the available slot.

Further, in Method 2, the repetition transmission may be applied across both an SBFD symbol and a non-SBFD symbol regardless of the symbol type. For example, the first PUSCH transmission may be performed in the SBFD symbol, and the second PUSCH transmission may be performed in the non-SBFD symbol.

Further, for example, in a case where the frequency hopping is configured, a position to which the frequency hopping is applied may be considered as a frequency resource. For example, base station 100 may determine whether or not the resource for the UL transmission is within a UL resource in the SBFD symbol based on the resource after the frequency hopping is applied.

Further, for example, in a case where a plurality of UL subbands are included in the SBFD symbol, the repetition transmission may be performed in a UL subband different from the UL subband in which the UL transmission is first scheduled. Further, in a case where different frequency hopping is configured or defined for an SBFD symbol and a non-SBFD symbol, different frequency hopping may be applied in each symbol in which the repetition transmission is performed.

Hereinafter, a method of determining an available slot based on the symbol type and the frequency domain resource for the UL transmission will be described.

### <Method 2-1>

In Method 2-1, base station 100 determines an available slot based on the symbol type and the frequency domain resource for the UL transmission without considering dynamic conversion between an SBFD symbol and a non-SBFD symbol.

For example, in a case where the frequency domain resource for the UL transmission is disposed in the frequency domain of the UL subband (e.g., in a case where the frequency domain resource for the UL transmission does not collide with a DL resource), base station 100 determines the slot to be an available slot based on the slot and the symbol configuration configured semi-statically.

For example, in a case where the UL transmission is scheduled, base station 100 may determine a slot satisfying both of the following conditions in a slot after the slot in which the UL transmission is scheduled to be an available slot.

### Condition 1:

In a case where a symbol of the symbol number in which the UL transmission is scheduled is a non-SBFD symbol configured semi-statically (e.g., in a case where the symbol type is Type 1 or Type 2) and the symbol is a UL symbol or a flexible symbol.

### Condition 2:

In a case where a symbol of the symbol number in which the UL transmission is scheduled is an SBFD symbol configured semi-statically (e.g., in a case where the symbol type is Type 3 or Type 4) and the frequency domain resource for the UL transmission is included in the UL resource in an SBFD symbol.

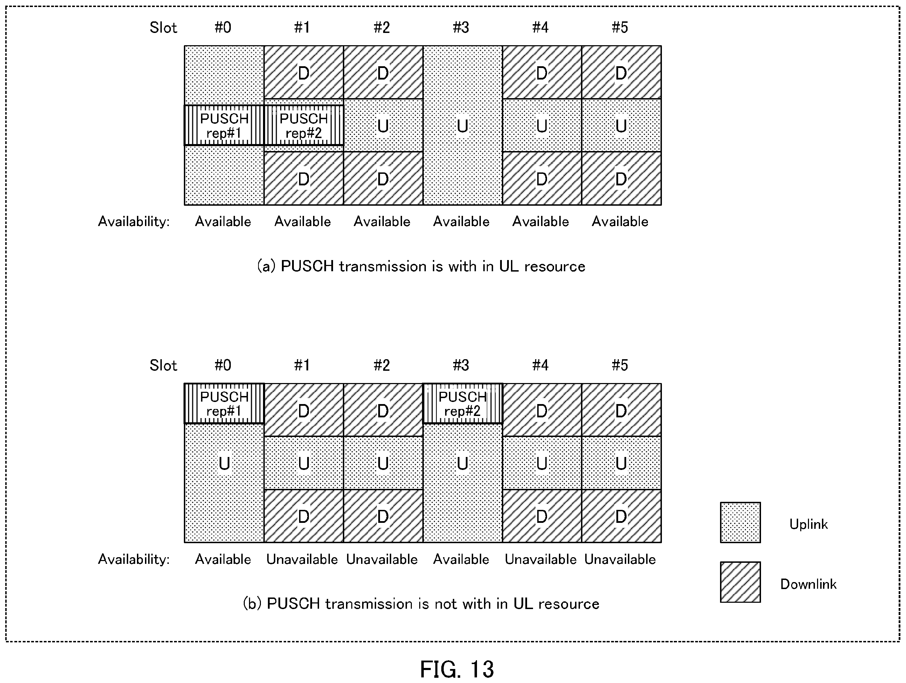

FIG. 13 illustrates a determination example of an available slot according to Method 2-1. In the example of FIG. 13, the number of repetitions of PUSCH is configured to two (e.g., represented by PUSCH rep#1 and PUSCH rep#2). In the example of FIG. 13, no frequency hopping is applied.

In FIG. 13, part (a) illustrates an example in which a frequency domain resource scheduled for the UL transmission is included in the UL resource (UL subband) in an SBFD symbol. In part (a) of FIG. 13, the PUSCH transmission (PUSCH rep#1) is scheduled in Slot#0 (slot composed of non-SBFD symbol), and the frequency domain resource allocated to PUSCH rep#1 is located in a UL subband in an SBFD symbol (e.g., each symbol of Slot#1, #2, #4, and #5). In this case, as illustrated in part (a) of FIG. 13, both the UL slots (Slot#0, #3) and the SBFD slots (Slots #1, #2, #4, and #5) are determined to be available. Therefore, in the example of part (a) of FIG. 13, Slots #0 to #5 are determined as available slots, and the second PUSCH (PUSCH rep#2) is transmitted in Slot#1.

In FIG. 13, part (b) illustrates an example in which the frequency domain resource for the UL transmission is not included in a UL resource (UL subband) in an SBFD symbol (e.g., included in the DL resource). In part (b) of FIG. 13, the PUSCH transmission (PUSCH rep#1) is scheduled in Slot#0 (slot composed of non-SBFD symbol), and the frequency domain resource allocated to PUSCH rep#1 is located in a resource (DL subband) different from a UL subband in SBFD symbols (e.g., symbols of Slots #1, #2, #4, and #5). In this case, as illustrated in part (b) of FIG. 13, the UL slots (Slot#0, #3) are determined to be available, and the SBFD slots (Slots #1, #2, #4, and #5) are determined to be unavailable. Therefore, in the example of part (b) of FIG. 13, Slots #0 and #3 are determined as available slots, and the second PUSCH (PUSCH rep#2) is transmitted in Slot#3.

As described above, according to Method 2-1, terminal 200 can reduce the UL latency by performing the repetition transmission across an SBFD symbol and a non-SBFD symbol.

### <Method 2-2>

In Method 2-2, base station 100 determines an available slot based on the symbol type and the frequency domain resource for the UL transmission by considering dynamic conversion between an SBFD symbol and a non-SBFD symbol.

For example, even in a case where the UL transmission is scheduled for an SBFD symbol in a case where a non-SBFD symbol may be dynamically converted into the SBFD symbol, the non-SBFD symbol may be regarded as the symbol that can be transmitted in UL. However, it is assumed that the frequency domain resource for the UL transmission is within the UL resource of an SBFD symbol.

Further, for example, even in a case where the UL transmission is scheduled for a non-SBFD symbol in a case where an SBFD symbol may be dynamically converted into a non-SBFD symbol, the SBFD symbol may be regarded as the symbol that can be transmitted in UL. However, it is assumed that the SBFD symbol may be converted into a UL symbol or a flexible symbol (or symbol that can be transmitted in UL) in a case of being converted into a non-SBFD symbol. For example, in a case where an SBFD symbol is converted only into a DL symbol, the symbol is not regarded as the symbol that can be transmitted in UL.

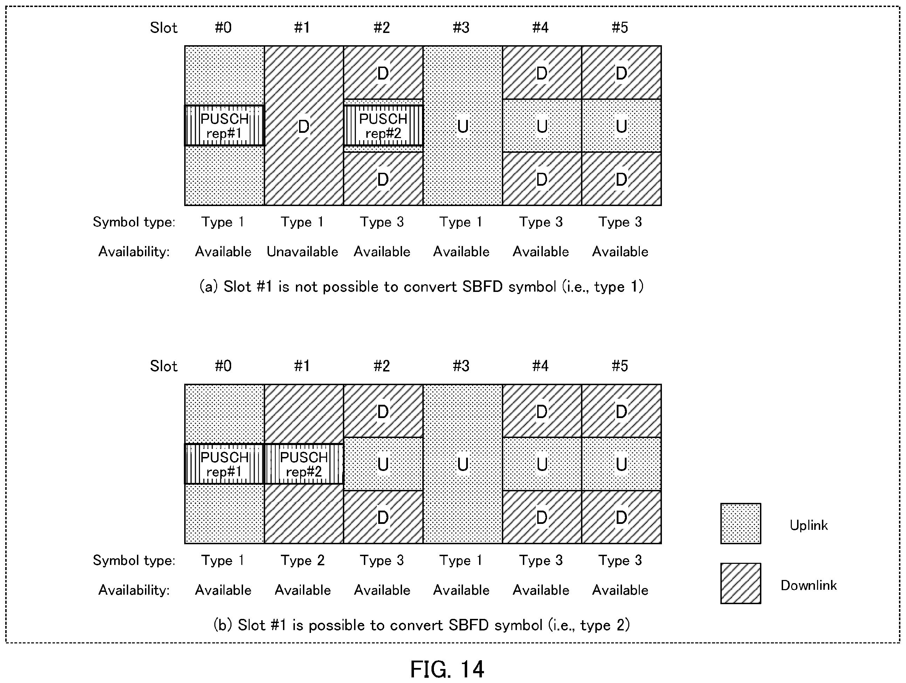

FIG. 14 illustrates a determination example of an available slot according to Method 2-2. In the example of FIG. 14, the number of repetitions of PUSCH is configured to two (e.g., represented by PUSCH rep#1 and PUSCH rep#2). In the example of FIG. 14, no frequency hopping is applied.

In FIG. 14, part (a) illustrates an example in which there is no dynamic conversion from a non-SBFD symbol to an SBFD symbol. In the example of part (a) of FIG. 14, the PUSCH transmission (PUSCH rep#1) is scheduled in Slot#0 (e.g., a slot composed of non-SBFD symbol), and the frequency domain resource allocated to PUSCH rep#1 is located in a UL subband in an SBFD symbol (e.g., the symbols of Slot#2, #4, and #5). In part (a) of FIG. 14, the symbol of the next Slot#1 is the DL symbol (non-SBFD symbol) and the symbol that does not have a possibility of being converted into an SBFD symbol (e.g., the symbol of Type 1 and thus is determined to be unavailable. In part (a) of FIG. 14, the symbol (SBFD symbol) of Slot#2 is determined to be available since the frequency domain resource for the UL transmission is within the UL resource of an SBFD symbol. Therefore, in the example of part (a) of FIG. 14, Slots #0 and #2 (and Slots #3 to #5) are determined as available slots, and the second PUSCH (PUSCH rep#2) is transmitted in Slot#2.

In FIG. 14, part (b) illustrates an example in which there is dynamic conversion from a non-SBFD symbol to an SBFD symbol. In the example of part (b) of FIG. 14, the PUSCH transmission (PUSCH rep#1) is scheduled in Slot#0 (e.g., a slot composed of non-SBFD symbol), and the frequency domain resource allocated to PUSCH rep#1 is located in a UL subband in an SBFD symbol (e.g., the symbols of Slot#2, #4, and #5). In part (b) of FIG. 14, the next Slot#1 is a symbol (e.g., the symbol of Type 2) that may be converted into an SBFD symbol, and the frequency domain resource for the UL transmission is within a UL resource of an SBFD symbol (e.g., the symbols of Slot#2, #4, and #5). Therefore, Slot#1 is determined to be available. Therefore, in the example of part (b) of FIG. 14, Slots #0, #1 (and Slots #2 to #5) are determined as available slots, and the second PUSCH (PUSCH rep#2) is transmitted in Slot#1.

In part (b) of FIG. 14, in a case where Slot#1 is not converted into an SBFD symbol before the transmission of PUSCH rep#2, the transmission of PUSCH rep#2 is dropped.

As described above, according to Method 2-2, terminal 200 can determine an available slot by considering the state of a symbol after dynamic conversion in the dynamic SBFD, so that the UL transmission opportunity can be improved.

### <Method 2-3>

In Method 2-3, base station 100 determines an available slot based on the symbol type and the frequency domain resource for the UL transmission by considering the mapping of one UL transmission (e.g., transmission opportunity) in the repetition transmission across an SBFD symbol and a non-SBFD symbol.

In a case where a resource for the UL transmission is disposed within the frequency domain of a UL subband of an SBFD symbol even when the time domain resource for the UL transmission is disposed across an SBFD symbol and a non-SBFD symbol in a case of determining an available slot (e.g., in a case where the resource for the UL transmission does not collide with a DL resource), base station 100 determines the slot including these symbols as the available slot.

Whether or not one UL transmission (e.g., one transmission opportunity) can be mapped across an SBFD symbol and a non-SBFD symbol may be configured by the capability of terminal 200, or may be configured from base station 100 to terminal 200 by RRC signaling or the like.

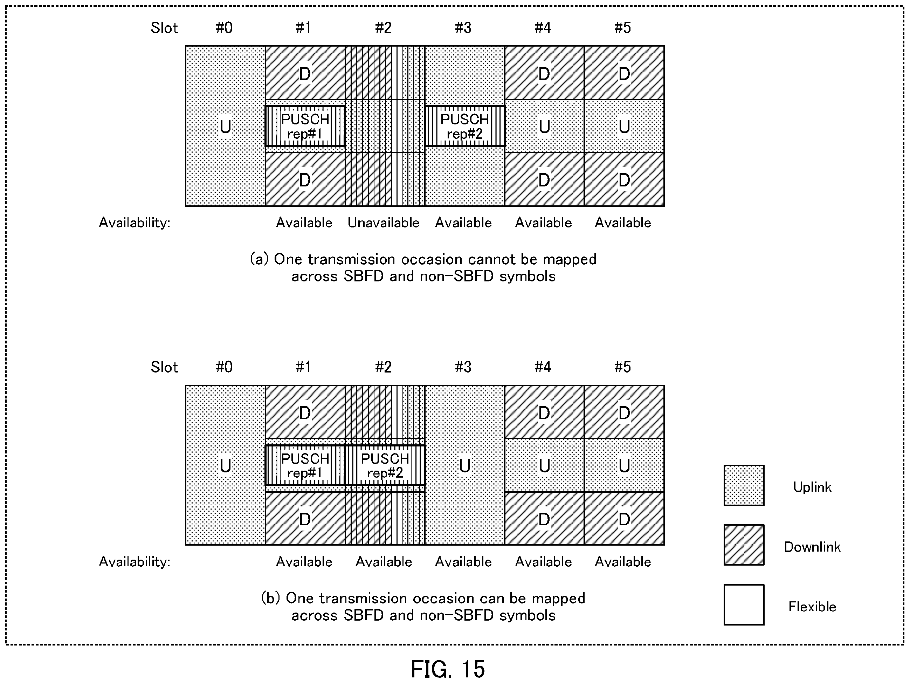

FIG. 15 illustrates a determination example of an available slot according to Method 2-3. In the example of FIG. 15, the number of repetitions of PUSCH is configured to two (e.g., represented by PUSCH rep#1 and PUSCH rep#2). In the example of FIG. 15, no frequency hopping is applied.

In FIG. 15, part (a) illustrates a case where one UL transmission is not mapped across an SBFD symbol and a non-SBFD symbol. In part (a) of FIG. 15, the PUSCH transmission (PUSCH rep#1) is scheduled in Slot#1. In part (a) of FIG. 15, Slot#2 is composed of SBFD symbols (8 symbols) and non-SBFD symbols (flexible symbols: 2 symbols, UL symbols: 4 symbols). Since the time domain resource (e.g., 14 symbols) of PUSCH is disposed across SBFD symbols and non-SBFD symbols, Slot#2 is determined to be unavailable, and PUSCH rep#2 is not assigned to Slot#2.

In FIG. 15, part (b) illustrates a case where one UL transmission is mapped across an SBFD symbol and a non-SBFD symbol. In part (b) of FIG. 15, the PUSCH transmission (PUSCH rep#1) is scheduled in Slot#1. Further, the frequency domain resource to which PUSCH rep#1 is assigned is located in a UL subband in an SBFD symbol (e.g., the symbols of Slots #2, #4, and #5). In this case, in Slot#2 illustrated in part (b) of FIG. 15, PUSCH can be mapped across an SBFD symbol and a non-SBFD symbol, and there is no collision between the resource for the UL transmission and the DL resource, so that Slot#2 is determined to be available, and PUSCH rep#2 is assigned to Slot#2.

As described above, according to Method 2-3, by determining an available slot by considering that one UL transmission is mapped across an SBFD symbol and a non-SBFD symbol, the UL transmission opportunity can be improved.

Method of determining an available slot according to Method 2 has been described above.

### <Additional Rules>

The following additional rules may be applied to Method 2.

### <Rule 2-1>

The frequency domain resource allocated to UL transmission is always determined to be unavailable in a case where the resource collides with a specific frequency domain resource in an SBFD symbol.

By always determining the specific frequency domain resource of an SBFD symbol to be unavailable, the UL transmission (e.g., the repetition transmission using an available slot) using the specific frequency domain is hindered. The hindrance of the UL transmission using the specific frequency domain can be used, for example, for the purpose of protecting the transmission and reception of an SBFD-incompatible terminal (existing terminal or the like). For example, in a case of performing DL reception in an SBFD symbol, the interference from the UL subband may occur, so that the quality of DL reception of the SBFD-incompatible terminal can be improved by not using the specific frequency domain resource for the UL transmission.

By Rule 2-1, the interference between DL and UL can be reduced in the specific frequency domain resource, and the quality of transmission and reception can be improved.

The presence or absence of application of the configuration of Rule 2-1 may be different for each terminal. In addition to the configuration of the frequency domain resource, the time domain resource may be configured in combination (e.g., UL transmission may be limited to a specific slot or symbol).

### <Rule 2-2>

In a flexible symbol, the frequency domain resource for UL transmission is configured to be determined to be available in a case where the resource is within the specific frequency domain resource.

Here, the specific frequency domain resource may be, for example, the same resource as the frequency domain of the UL subband. As described in Method 1-3, a flexible symbol can be used for the SBFD operation by the transparent method. Therefore, in a case of applying the transparent SBFD operation in the flexible symbol, the frequency domain resource that can be used for the UL transmission is configured (or limited) as in the SBFD symbol.

As a result, for example, in a case of performing the SBFD operation, the resource for the UL transmission can be prevented from colliding with the frequency domain serving as the DL resource.

The configuration of Rule 2-2 may be configured in terminal 200 by RRC signaling or the like. Further, Rule 2-2 may be configured to be applied to a specific time domain resource (e.g., a slot or a symbol).

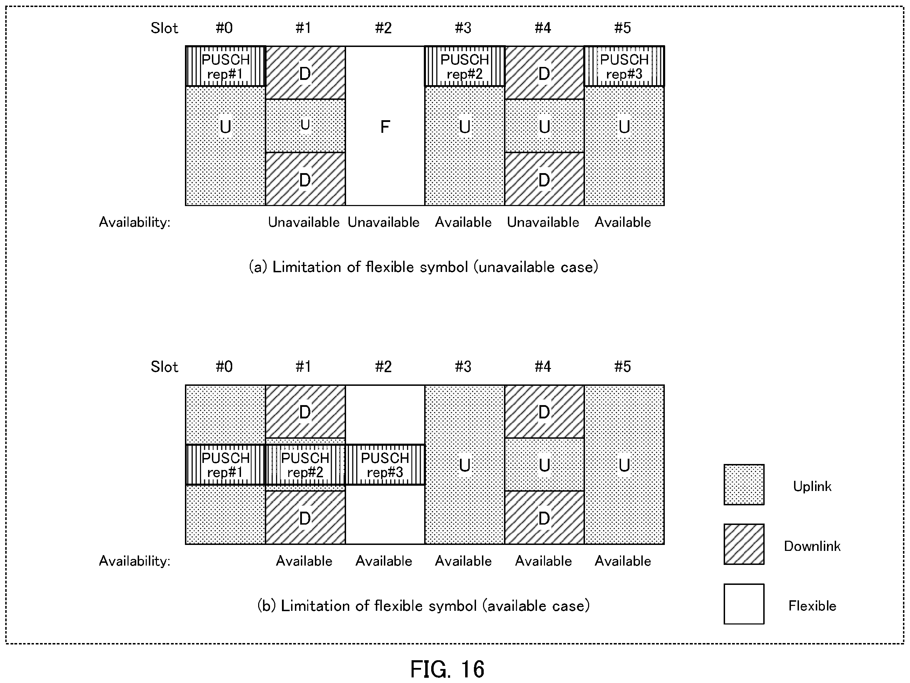

FIG. 16 illustrates an example of applying Rule 2-2 in addition to Method 2-1 as an example. In FIG. 16, the number of repetitions is configured to three.

In FIG. 16, part (a) illustrates a case where a flexible symbol is determined to be unavailable as a result of applying Rule 2-2. In part (a) of FIG. 16, Slot#2 is a flexible slot, and the UL transmission in the frequency domain corresponding to a UL subband in an SBFD symbol is configured to be possible. In the example of part (a) of FIG. 16, the PUSCH transmission (PUSCH rep#1) is scheduled in Slot#1 (UL slot), and the frequency domain resource for PUSCH rep#1 is located outside a UL subband in an SBFD symbol (e.g., within a DL subband). In this case, Slot#2 is a flexible slot, but since the frequency domain resource for PUSCH is located outside the UL subband, it is determined to be available. Therefore, in part (a) of FIG. 16, PUSCH rep#2 and PUSCH rep#3 are allocated to Slots #3 and #5 (both are UL slots) determined to be available.

In FIG. 16, part (b) illustrates a case where a flexible symbol is determined to be available as a result of applying Rule 2-2. In the example of part (b) of FIG. 16, the PUSCH transmission (PUSCH rep#1) is scheduled in Slot#0 (UL slot), and the frequency domain resource for PUSCH rep#1 is within a UL subband in an SBFD symbol. In part (b) of FIG. 16, Slot#1 is composed of an SBFD symbol, and the frequency domain resource for PUSCH is within the UL resource (UL subband) of the SBFD symbol, so that Slot#1 is determined to be available. Therefore, PUSCH rep#2 is assigned to Slot #1. Further, in part (b) of FIG. 16, Slot#2 is a flexible slot, and the UL transmission in the frequency domain corresponding to a UL subband in an SBFD symbol is configured to be possible. In in part (b) of FIG. 16, since the frequency domain resource for PUSCH is located in a UL subband, Slot#2 is determined to be available. Therefore, PUSCH rep#3 is assigned to Slot #2.

By using a flexible symbol according to Rule 2-2 to perform the SBFD operation transparently for an SBFD-incompatible terminal and to configure the possibility of the SBFD operation for an SBFD-compatible terminal, the SBFD-incompatible terminal and the SBFD-compatible terminal can be efficiently accommodated in a mixed state.

### <Rule 2-3>

A method of determining whether it is available is made different depending on whether the UL transmission is scheduled in an SBFD symbol or a non-SBFD symbol.

For example, in an SBFD symbol, since the inter-link interference may occur, the communication quality tends to be lower than that in a non-SBFD symbol. Therefore, the MCS configured in an SBFD symbol may be lower than the MCS configured in a non-SBFD symbol. For example, it is preferable to reduce the coding rate in the SBFD symbol.

Therefore, for example, in a case where PUSCH is scheduled in a non-SBFD symbol and is repeated in an SBFD symbol, the coding rate in the SBFD symbol may not be sufficient. For example, even in a case where the size of the resource is the same between the SBFD symbol and the non-SBFD symbol, the SBFD symbol may require a lower coding rate in order to compensate for the deterioration due to the interference.

Therefore, in a case where the UL transmission is scheduled in an SBFD symbol, the determination of an available slot may be performed according to the above-described method. Meanwhile, in a case where the UL transmission is scheduled in a non-SBFD symbol, an SBFD symbol may be determined to be non-available.

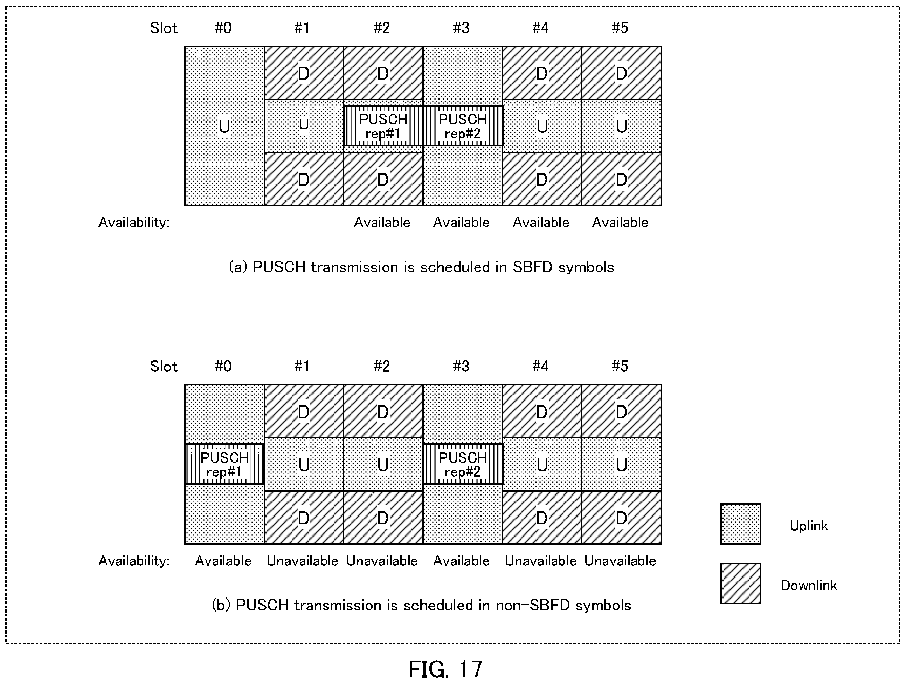

FIG. 17 illustrates an example of applying Rule 2-3 in addition to Method 2-1 as an example. In FIG. 17, the number of repetitions is configured to two.

In FIG. 17, part (a) illustrates an example in which the PUSCH is scheduled in an SBFD symbol. In part (a) of FIG. 17, the PUSCH transmission (PUSCH rep#1) is scheduled in Slot#2 (slot composed of SBFD symbol). In this case, as in Method 2-1, Slot#3 (UL slot) is determined to be available, and PUSCH rep#2 is assigned to Slot#3.

In FIG. 17, part (b) illustrates an example in which PUSCH is scheduled in a non-SBFD symbol. In part (b) pf FIG. 17, the PUSCH transmission (PUSCH rep#1) is scheduled in Slot#0 (slot composed of non-SBFD symbol), and the frequency domain resource for PUSCH rep#1 is located in a UL subband in an SBFD symbol. In this case, in a case where Rule 2-3 is not applied, Slots #1 and #2 (slots composed of SBFD symbols) are determined to be available, but in a case where Rule 2-3 is applied, Slots #1 and #2 are determined to be unavailable. As a result, PUSCH rep#2 is assigned to Slot#3 (UL slot).

By determining an available slot by considering the difference in the communication quality between an SBFD symbol and a non-SBFD symbol according to Rule 2-3, the performance of the repetition transmission can be improved (e.g., reception failure can be reduced).

The example of the method of determining an available slot has been described above.

As described above, in the present embodiment, base station 100 and terminal 200 determine an available slot of PUSCH transmission (e.g., repetition transmission) based on at least a group including the symbol type, and perform the transmission or the reception of PUSCH in the determined available slot. As a result, for example, even in a case where an SBFD symbol and a non-SBFD symbol are mixed, the available slot counting can be appropriately controlled, so that base station 100 and terminal 200 can appropriately control the PUSCH repetition transmission in a case of performing the SBFD operation. Therefore, according to the present embodiment, the repetition transmission in the radio communication can be appropriately controlled.

### (Other Embodiments)

The method of determining an available slot described above may be applied even in a case where no dynamic SBFD is used (e.g., except for Method 1-2 and Method 2-2). In this case, for example, the available slot may be determined by using Type 1 and Type 3 without using Type 2 and Type 4.

Further, in the method of determining the available slot described above, the instruction of the first UL transmission is described as "scheduling", but this is not limited to the dynamic scheduling by PDCCH and may include a case where the UL transmission is configured semi-statically by RRC signaling or the like. For example, the instruction of the UL transmission may include a case where transmission of a configured grant (CG)-PUSCH, PUCCH, an SRS, or the like is configured periodically.

Further, in the embodiment described above, the determination of an available slot may be performed in units of symbols. For example, the determination of an available slot may be performed according to whether or not all the symbols satisfy a condition. The examples and the description of each method (e.g., FIG. 9 and the description thereof) are described in units of slots for simplicity, but the determination in units of symbols may be actually applied. In one exemplary embodiment of the present disclosure, the determination is performed in units of symbols unless otherwise specified.

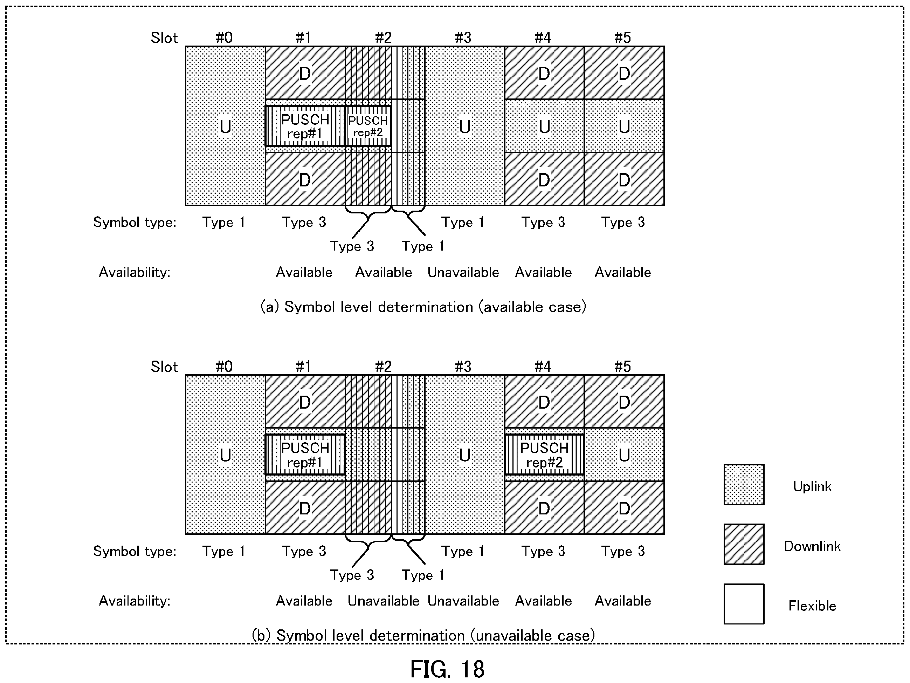

FIG. 18 illustrates an example of the determination of an available slot in units of symbols. In the example illustrated in FIG. 18, the available slot is determined by Method 1-1. In FIG. 18, Slot#2 is composed of SBFD symbols (8 symbols), non-SBFD symbols (flexible symbol: 2 symbols, UL symbol: 4 symbols).

In FIG. 18, part (a) illustrates an example of the determination as available in units of symbols. In the example of part (a) of FIG. 18, in Slot#2, the time domain resource for PUSCH rep#2 is scheduled in 8 symbols. In this case, as illustrated in part (a) of FIG. 18, in Slot#2, the time domain resource for PUSCH is within an SBFD symbol, so that Slot#2 is determined to be available.

In FIG. 18, part (b) illustrates an example of the determination as unavailable in units of symbols. In the example of part (b) of FIG. 18, in Slot#1, the time domain resource for PUSCH rep#1 is scheduled in 14 symbols. In this case, as illustrated in part (b) of FIG. 18, in Slot#2, the time-domain resource for the PUSCH is not within an SBFD symbol, so that Slot#2 is determined to be unavailable.

Further, in the embodiment described above, the slot composed of a plurality of symbols has been described as an example, but the unit of the time domain resource is not limited to the symbol and the slot and may be another time domain resource or another combination of time domain resources.

Further, in the embodiment described above, in the dynamic SBFD, in a case where a symbol is converted by dynamic signaling (e.g., indication by PDCCH) (e.g., conversion from SBFD symbol to non-SBFD symbol or conversion from non-SBFD symbol to SBFD symbol), the UL transmission may be dropped. In this case, as an alternative, the determination of the available slot or the scheduling of base station 100 can be simplified by not performing the UL transmission in the next available slot. For example, by not changing the count of the available slot by dynamic signaling, the determination of the available slot can be prevented from being complicated.

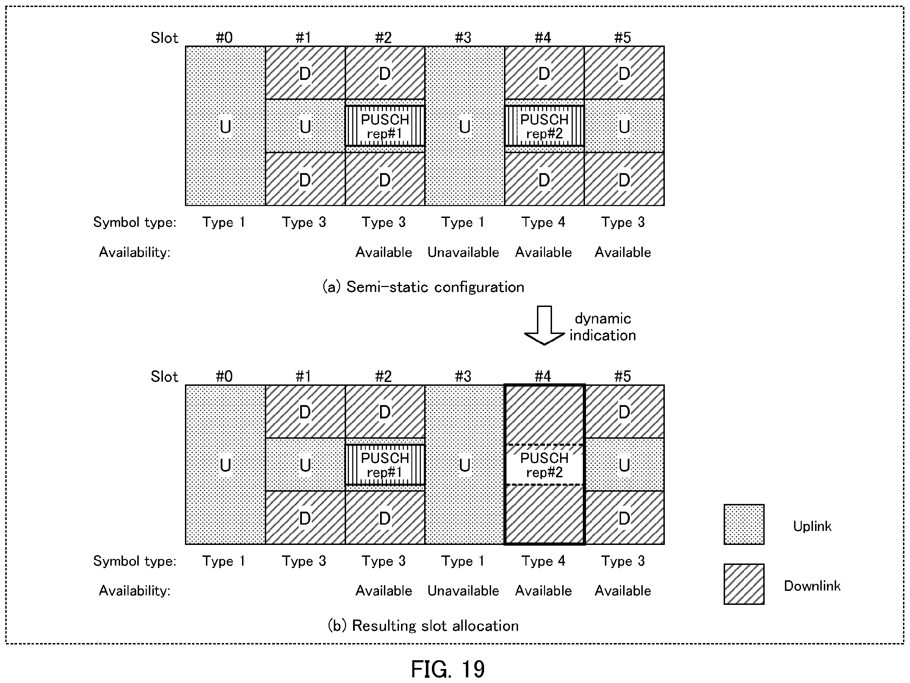

FIG. 19 illustrates an example of the drop of UL transmission by dynamic signaling. In the example illustrated in FIG. 19, the available slot is determined by Method 1-1.

In FIG. 19, part (a) illustrates a slot configuration configured semi-statically. In Slot#2, PUSCH rep#1 is scheduled. In this case, Slot#4 (slot composed of an SBFD symbol) is determined to be available, and PUSCH rep#2 is assigned to Slot#4.

In FIG. 19, part (b) illustrates a result of changing the slot configuration in part (a) of FIG. 19 based on the dynamic signaling. As illustrated in part (b) of FIG. 19, Slot#4 is changed from an SBFD slot to a non-SBFD slot (DL slot). In this case, since the resource for PUSCH collides with a DL symbol, the transmission of PUSCH rep#2 is dropped.

The operation of performing the UL transmission in the next available slot as an alternative after the UL transmission is dropped by dynamic signaling may be performed. For example, the determination of an available slot may be performed again until the number of repetitions is reached at the time when the UL transmission is dropped. In this case, the increase in the coding rate due to the drop can be suppressed, and the performance of UL can be improved.

Further, in the above-described embodiment, a case where SBFD is applied has been described, but one exemplary embodiment of the present disclosure may be applied without being limited to SBFD as long as the transmission direction (e.g., DL or UL) is configured for the plurality of bands (e.g., subbands) into which the frequency band is divided.

Further, in the embodiments described above, the values such as the number of subbands, the number of DL subbands, the number of UL subbands, the number of slots, the number of symbols, and the number of repetitions are examples and are not limited. Further, the subband configurations used in the embodiments described above are examples, and the number of subbands, the arrangement order of a DL subband and a UL subband are not limited thereto.

Further, the embodiments described above have described the determination of an available slot for PUSCH transmission, but the determination of an available slot may be applied to a channel or a signal having a different transmission direction such as other uplink channels or signals, a downlink, or a sidelink, not limited to PUSCH.

### (Supplementary Note)

Information indicating whether terminal 200 supports the functions, operations, or pieces of processing that have been indicated in the above-mentioned embodiments may be transmitted (or indicated) from terminal 200 to base station 100, as capability information or a capability parameter for terminal 200, for example.

The capability information may include an information element (IE) individually indicating whether terminal 200 supports at least one of the functions, operations, or processes described in the above-described embodiments. Alternatively, the capability information may include an information element indicating whether terminal 200 supports a combination of any two or more of the functions, operations, and processing described in the above embodiments.

Base station 100 may determine (or assume) the function, operation, or process supported (or not supported) by terminal 200 of the transmission source of the capability information, based on the capability information received from terminal 200, for example. Base station 100 may execute operations, processes, or control in accordance with a determination result based on the capability information. For example, base station 100 may control resource allocation for terminal 200 based on the capability information received from terminal 200.

Note that the fact that terminal 200 does not support some of the functions, operations, or processes described in the above-described embodiments may be read as that some of the functions, operations, or processes are limited in terminal 200. For example, information or a request relating to such limitation may be indicated to base station 100.

The information related to the capability or the limitation of terminal 200 may be defined by standards or may be implicitly indicated to base station 100 in association with information known in base station 100 or information to be transmitted to base station 100, for example.

### (Control Signals)

In the present disclosure, the downlink control signal (or downlink control information) relating to one exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or Radio Resource Control (RRC) in a higher layer. Further, the signal (or information) is not limited to that indicated by the downlink control signal, but may be predefined in the specifications (or standard) or may be pre-configured for the base station and the terminal.

In the present disclosure, an uplink control signal (or uplink control information) relating to an exemplary embodiment of the present disclosure may be, for example, a signal (or information) transmitted through a PUCCH of the physical layer or a signal (or information) transmitted through the MAC CE or RRC of the higher layer. Further, the signal (or information) is not limited to that indicated by the uplink control signal, and may be predefined in the specifications (or standard) or may be pre-configured for the base station and the terminal. The uplink control signal may be replaced with, for example, uplink control information (UCI), 1st stage sidelink control information (SCI), or 2nd stage SCI.

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in sidelink communication, a terminal may play a role of a base station. Furthermore, instead of the base station, a relay apparatus that relays communication between a higher node and a terminal may be used. Moreover, a road side device may be used.

### (Uplink/Downlink/Sidelink)

One exemplary embodiment of the present disclosure may be applied to, for example, any of an uplink, a downlink, and a sidelink. For example, one exemplary embodiment of the present disclosure may be applied to an uplink Physical Uplink Shared Channel (PUSCH), Physical Uplink Control Channel (PUCCH), or Physical Random Access Channel (PRACH), a downlink Physical Downlink Shared Channel (PDSCH), PDCCH, or Physical Broadcast Channel (PBCH), or a sidelink Physical Sidelink Shared Channel (PSSCH), Physical Sidelink Control Channel (PSCCH), or Physical Sidelink Broadcast Channel (PSBCH).

Note that PDCCH, PDSCH, PUSCH, and PUCCH are examples of a downlink control channel, a downlink data channel, an uplink data channel, and an uplink control channel, respectively. Further, PSCCH and PSSCH are examples of a sidelink control channel and a sidelink data channel, respectively. Further, PBCH and PSBCH are examples of broadcast channels, and PRACH is an example of a random access channel.

### (Data Channels/Control Channels)

One exemplary embodiment of the present disclosure may be applied to, for example, any of a data channel and a control channel. For example, a channel in an exemplary embodiment of the present disclosure may be replaced with any one of PDSCH, PUSCH, and PSSCH being the data channels, or PDCCH, PUCCH, PBCH, PSCCH, and PSBCH being the control channels.

### (Reference Signals)

One exemplary embodiment of the present disclosure, a reference signal is a signal known to both of a base station and a mobile station, for example, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In one exemplary embodiment of the present disclosure, the units of time resources are not limited to one or a combination of slots and symbols, but may be time resource units such as, for example, frames, superframes, subframes, slots, time slot subslots, minislots, or symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

One exemplary embodiment of the present disclosure may be applied to either a licensed band or an unlicensed band.

### (Communication)

One exemplary embodiment of the present disclosure may be applied to any of communication between a base station and a terminal (Uu link communication), communication between a terminal and a terminal (Sidelink communication), and communication of a Vehicle to Everything (V2X). For example, a channel in an exemplary embodiment of the present disclosure may be replaced with any of PSCCH, PSSCH, Physical Sidelink Feedback Channel (PSFCH), PSBCH, PDCCH, PUCCH, PDSCH, PUSCH, and PBCH.

Further, one exemplary embodiment of the present disclosure may be applied to any of a terrestrial network or a network (Non-Terrestrial Network (NTN)) other than a terrestrial network using a satellite or a High Altitude Pseudo Satellite (HAPS). Further, one exemplary embodiment of the present disclosure may be applied to a network having a large cell size, and a terrestrial network with a large delay compared with a symbol length or a slot length, such as an ultra-wideband transmission network.

### (Antenna Ports)

In one exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

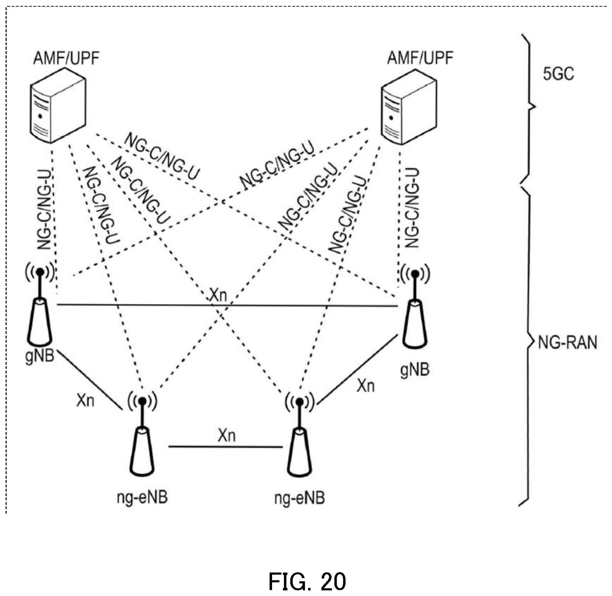

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 20 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10⁻⁵ within 1 ms). Finally, the mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

### <Functional Split between NG-RAN and 5GC in 5G NR>

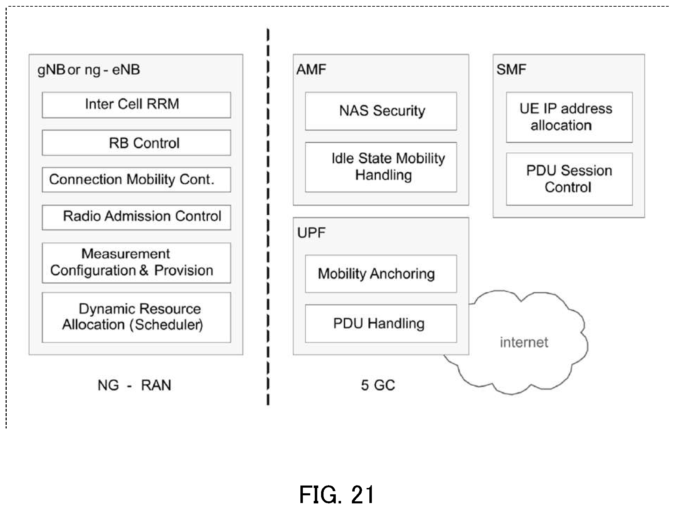

FIG. 21 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing;
- Session Management Function (SMF) selection.

Further, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data indication triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data indication.

### <RRC Connection Setup and Reconfiguration Procedure>

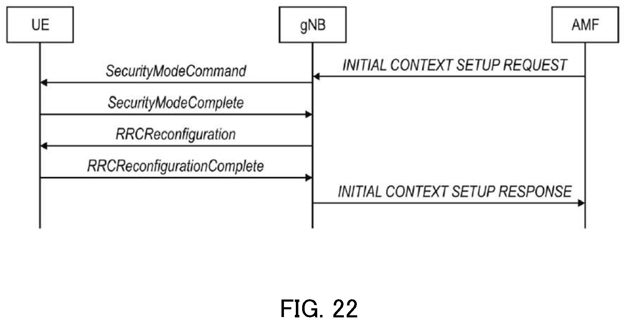

FIG. 22 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

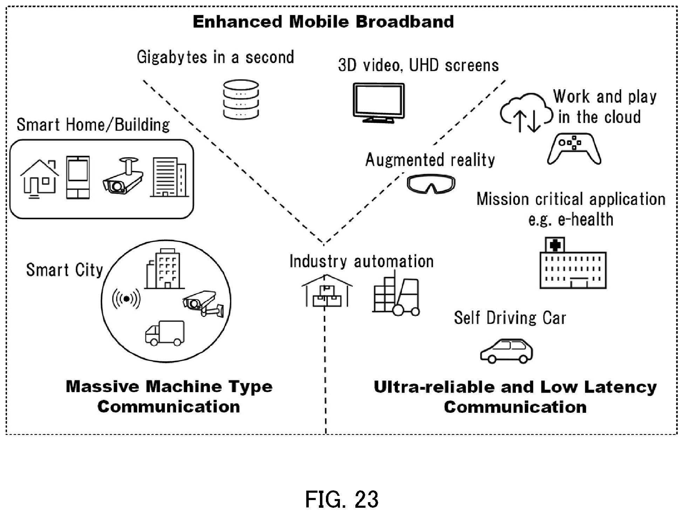

FIG. 23 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. Further to further extending the eMBB support, the current and future work would involve the standardization for ultra-reliable and low-latency communications (URLLC) and massive machine-type communications (mMTC). FIG. 23 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of element techniques to enable future vertical applications such as radio control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for the URLLC and mMTC for example, is high reliability or ultra-reliability. Several mechanisms can improve the reliability from radio perspective and network perspective. In general, there are a few key potential areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet size of up to 256 bytes, time synchronization down to the order of a few µs where the value can be one or a few µs depending on frequency range and short latency in the order of 0.5 ms to 1 ms (e.g., target user plane latency of 0.5 ms) depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 17. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

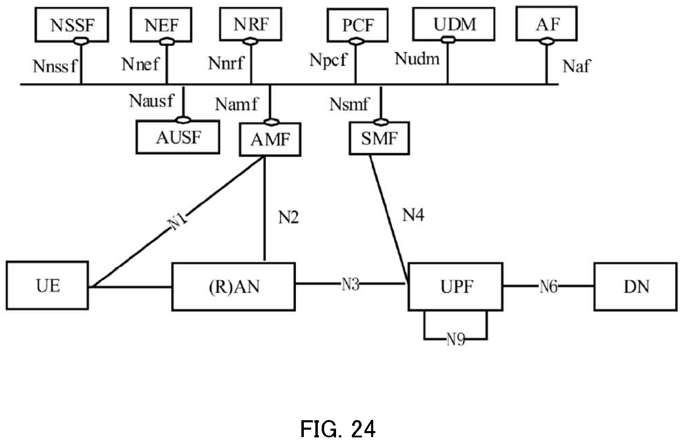

FIG. 24 illustrates a 5G NR non-roaming reference architecture (see TS 23.501 v16.1.0, section 4.23). An Application Function (AF) ( e.g., an external application server hosting 5G services, exemplarily described in FIG. 23) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 24 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A base station according to one exemplary embodiment of the present disclosure includes: control circuitry, which, in operation, determines a slot available for repetition transmission of an uplink signal, based on a group including at least a symbol type; and reception circuitry, which, in operation, receive the uplink signal in the determined slot.

In one exemplary embodiment of the present disclosure, the control circuitry determines the slot available for the repetition transmission based on the symbol type.

In one exemplary embodiment of the present disclosure, the control circuitry determines the slot available for the repetition transmission without taking into consideration dynamic conversion between a first symbol in which a frequency band is divided into a plurality of bands and a second symbol different from the first symbol.

In one exemplary embodiment of the present disclosure, the control circuitry determines the slot available for the repetition transmission, taking into consideration dynamic conversion between a first symbol in which a frequency band is divided into a plurality of bands and a second symbol different from the first symbol.

In one exemplary embodiment of the present disclosure, the control circuitry determines the slot available for the repetition transmission, taking into consideration use of a flexible symbol in a scheme in which a transmission direction is configured in a plurality of bands resulting from division of a frequency band.

In one exemplary embodiment of the present disclosure, the control circuitry determines the slot available for the repetition transmission based on the symbol type and a frequency resource allocated to the repetition transmission.

In one exemplary embodiment of the present disclosure, the control circuitry determines the slot available for the repetition transmission without taking into consideration dynamic conversion between a first symbol in which a frequency domain is divided into a plurality of bands and a second symbol different from the first symbol.

In one exemplary embodiment of the present disclosure, the control circuitry determines the slot available for the repetition transmission, taking into consideration dynamic conversion between a first symbol in which a frequency domain is divided into a plurality of bands and a second symbol different from the first symbol.

In one exemplary embodiment of the present disclosure, the control circuitry determines the slot available for the repetition transmission, taking into consideration mapping in which one transmission opportunity in the repetition transmission includes mapping across a first symbol in which a frequency band is divided into a plurality of bands and a second symbol different from the first symbol.

A terminal according to one exemplary embodiment of the present disclosure includes: control circuitry, which, in operation, determines a slot available for repetition transmission of an uplink signal based on a group including at least a symbol type; and transmission circuitry, which, in operation, transmits the uplink signal in the determined slot.

A communication method according to one exemplary embodiment of the present disclosure includes: determining, by a base station, a slot available for repetition transmission of an uplink signal based on a group including at least a symbol type; and receiving, by the base station, the uplink signal in the determined slot.

A communication method according to one exemplary embodiment of the present disclosure includes: determining, by a terminal, a slot available for repetition transmission of an uplink signal based on a group including at least a symbol type; and transmitting, by the terminal, the uplink signal in the determined slot.

The disclosure of the specification, drawings, and summary of the Japanese patent application No. 2023-129366 filed on August 8, 2023 is incorporated in the present application by reference.

### Industrially applicable

An exemplary embodiment of the present disclosure is useful for radio communication systems.

### Reference Signs List

100 Base station
101, 201 Receiver
102, 202 Demapper
103, 203 Demodulator/decoder
104 Scheduler
105 Available slot controller
106, 206 Control information holder
107, 207 Data/control information generator
108, 208 Encoder/modulator
109, 209 Mapper
110, 210 Transmitter
200 Terminal
204 Available slot determiner
205 Controller

## Claims

1. A base station, comprising:
control circuitry, which, in operation, determines a slot available for repetition transmission of an uplink signal, based on a group including at least a symbol type; and
reception circuitry, which, in operation, receive the uplink signal in the determined slot.

2. The base station according to claim 1, wherein the control circuitry determines the slot available for the repetition transmission based on the symbol type.

3. The base station according to claim 2, wherein, the control circuitry determines the slot available for the repetition transmission without taking into consideration dynamic conversion between a first symbol in which a frequency band is divided into a plurality of bands and a second symbol different from the first symbol.

4. The base station according to claim 2, wherein, the control circuitry determines the slot available for the repetition transmission, taking into consideration dynamic conversion between a first symbol in which a frequency band is divided into a plurality of bands and a second symbol different from the first symbol.

5. The base station according to claim 2, wherein, the control circuitry determines the slot available for the repetition transmission, taking into consideration use of a flexible symbol in a scheme in which a transmission direction is configured in a plurality of bands resulting from division of a frequency band.

6. The base station according to claim 1, wherein the control circuitry determines the slot available for the repetition transmission based on the symbol type and a frequency resource allocated to the repetition transmission.

7. The base station according to claim 6, wherein, the control circuitry determines the slot available for the repetition transmission without taking into consideration dynamic conversion between a first symbol in which a frequency domain is divided into a plurality of bands and a second symbol different from the first symbol.

8. The base station according to claim 6, wherein the control circuitry determines the slot available for the repetition transmission, taking into consideration dynamic conversion between a first symbol in which a frequency domain is divided into a plurality of bands and a second symbol different from the first symbol.

9. The base station according to claim 6, wherein the control circuitry determines the slot available for the repetition transmission, taking into consideration mapping in which one transmission opportunity in the repetition transmission includes mapping across a first symbol in which a frequency band is divided into a plurality of bands and a second symbol different from the first symbol.

10. A terminal, comprising:
control circuitry, which, in operation, determines a slot available for repetition transmission of an uplink signal based on a group including at least a symbol type; and
transmission circuitry, which, in operation, transmits the uplink signal in the determined slot.

11. A communication method, comprising:
determining, by a base station, a slot available for repetition transmission of an uplink signal based on a group including at least a symbol type; and
receiving, by the base station, the uplink signal in the determined slot.

12. A communication method, comprising:
determining, by a terminal, a slot available for repetition transmission of an uplink signal based on a group including at least a symbol type; and
transmitting, by the terminal, the uplink signal in the determined slot.
